# EUROPÄISCHE PATENTSCHRIFT

(11) **EP 3 229 652 B1**
(45) Veröffentlichungstag und Bekanntmachung des Hinweises auf die Patenterteilung: **03.03.2021**
(21) Anmeldenummer: 15830979.9
(22) Anmeldetag: 04.12.2015
(51) Int. Cl.: A47J 37/04, A47J 37/06

(54) **GRILLVORRICHTUNG SOWIE KUPPLUNG UND GRILLGUTTELLER HIERFÜR**
GRILL DEVICE AND COUPLING AND CORRESPONDING PLATE FOR FOOD TO BE GRILLED
GRIL ET DISPOSITIF D'ACCOUPLEMENT ET ASSIETTE À ALIMENT À GRILLER DESTINÉS À CE GRIL

(30) Priorität: 08.12.2014 DE 102014018023
(43) Veröffentlichungstag der Anmeldung: 18.10.2017
(73) Patentinhaber: Winninger Ferieninsel Thomas Lange e. K., 56333 Winningen (DE)
(72) Erfinder: LANGE, Thomas, 56333 Winningen (DE)
(74) Vertreter: Macliing, Trixia
(86) Internationale Anmeldenummer: PCT/EP2015/002449
(87) Internationale Veröffentlichungsnummer: WO 2016/091371

(56) Entgegenhaltungen:
- WO-A2-03/022115
- DE-A1-102006 021 669
- DE-A1-102013 020 112
- FR-A1- 2 379 272
- US-A- 2 831 421
- US-A- 5 826 497

## Beschreibung

Die Erfindung betrifft eine Grillvorrichtung zum Grillen von Grillgut.

Im vorbekannten Stand der Technik sind Grillvorrichtungen zum Grillen von Grillgut bekannt, welche zur Sicherung einzelner Elemente, insbesondere der Grillgutträger zusätzliche Befestigungselemente, wie zum Beispiel Schrauben benötigen, um eine sichere Verbindung zwischen dem Grillgutträger und dem dazugehörigen Gestell sicherzustellen WO 03/022115 A2 beschreibt eine Grillvorrichtung.

Nachteilig hierbei ist, dass das Entfernen sowie das Anbringen der Grillgutträger durch die zusätzlichen Befestigungsmittel aufwendig ist. Weiterhin kann sich durch die Hitze das Material der Befestigungsmittel derart verformen, dass ein Lösen nicht mehr möglich oder zumindest erschwert ist.

Weitere relevante Stand der Technik Dokumente sind beispielsweise US 2 831 421 A und DE 10 2013 020112 A1.

Es ist Aufgabe der vorliegenden Erfindung eine Grillvorrichtung bereitzustellen, welche eine erleichterte Entnahme oder ein erleichtertes und sicheres Anbringen und Justieren der Grillgutträger ermöglicht. Insbesondere soll die Sicherheit für den Bediener beim Betrieb der Vorrichtung erhöht werden. Zudem soll ein Grillgutteller bereitgestellt werden, welcher für verschiedenartiges Grillgut ausgestaltet ist.

Diese Aufgaben werden durch die Merkmale des unabhängigen Anspruchs 1 gelöst.

Die Erfindung betrifft eine Grillvorrichtung zum Grillen von Grillgut umfassend wenigstens ein Gestell, mit wenigstens einem Gestellelement sowie mit wenigstens einem Halteelement, zum Beispiel oberen Halteelement und/oder einem unteren Halteelement, welches an einem oberen Ende des Gestellelementes angeordnet ist wobei die Grillvorrichtung um eine vertikale Längsachse rotierbar ausgebildet ist. Ferner kann sie mit wenigstens einem Grillgutträgerelement ausgestattet bzw. zu seiner Halterung geeignet sein. Die Grillvorrichtung kann insbesondere, im Falle eines oberen Halteelements, hängend und/oder, im Falle eines unteren Halteelements, stehend entlang der vertikalen Drehachse gelagert sein. Ein Kerngedanke der Erfindung ist, dass das Gestellelement bezüglich der vertikalen Drehachse exzentrisch angeordnet ist, damit das Grillgut zentrisch angeordnet sein kann. Insbesondere kann das Grillgut so liegend angeordnet werden, ohne dass man es gesondert arretieren, beispielsweise aufspießen, müsste. Die zentrische Anordnung des Grillguts hat den Vorteil, dass es so bei Rotation um die vertikale Drehachse einen im Wesentlichen (in Abhängigkeit beispielsweise von der Form des Grillguts) konstanten Abstand haben kann, damit es umfänglich möglichst gleichmäßig gegart werden kann.

Das wenigstens eine Grillgutträgerelement weist einen ersten Teilbereich auf, welcher mit einer Öffnung ausgestattet ist, durch welche das Gestellelement führbar ist. Das Gestellelement weist dabei einen nicht-rotationssymmetrischen Querschnitt auf, derart, dass das Grillgutträgerelement und das Gestellelement bezüglich einer Ebene, in der die vertikale Längsachse nicht liegt, also beispielsweise einer Normalenebene der vertikalen Längsachse formschlüssig zusammenwirken. So lässt sich das Grillgutträgerelement nur in Richtung der vertikalen Längsachse verschieben, aber nicht in einer dazu orthogonalen Richtung verdrehen. Ein nicht-rotationssymmetrischer Querschnitt ist bezüglich des Formschlusses von Vorteil, da bei rotationssymmetrischen Querschnitten die Gefahr eines ungewollten Verschiebens oder Abrutschens des Grillgutträgerelements besteht. Unter Längsachse ist hierbei diejenige Achse zu verstehen, in welcher die Grillvorrichtung ihre längste geometrische Ausdehnung aufweist. Bevorzugt ist die Längsachse gleichzeitig die zentrale Mittelachse der Grillvorrichtung. Insbesondere kann die vertikale Längsachse in Richtung der Schwerkraft ausgerichtet sein. Durch die Rotation der Grillvorrichtung um eine vertikale Längsachse wird ein gleichmäßiges Grillen des Grillguts ermöglicht. Es handelt sich folglich um eine vertikale Grillvorrichtung.

Weitere vorteilhafte Ausführungsformen ergeben sich aus den Unteransprüchen.

Weiterhin weist das Grillgutträgerelement bezüglich der Öffnung eine asymmetrische Gewichtsverteilung auf, so dass das Grillgutträgerelement und das Gestellelement bezüglich der vertikalen Längsachse kraftschlüssig, insbesondere durch eine Klemmverbindung, zusammenwirken. Durch diese asymmetrische Gewichtsverteilung wird das Grillgutträgerelement beispielsweise aufgrund der Schwerkraft in eine Position gebracht, in welcher sich das Grillgutträgerelement mit dem Gestellelement verklemmt, wodurch ein Kraftschluss erreicht wird. Dadurch ist es möglich, auf einfache und schnell einstellbare Weise eine sichere Verbindung auch ohne zusätzliche Befestigungsmittel zu erhalten, die man am heißen und meist von Fett und Essensresten bedeckten Gestellelement anbringen müsste. In dieser Verbindung entstehen zumindest zwei Kontaktpunkte zwischen der Öffnung und dem Gestellelement. Eine kraftschlüssige Verbindung entlang der vertikalen Längsachse aber eine vorzugsweise formschlüssige Verbindung in dazu orthogonalen Richtungen zwischen dem Grillgutträgerelement und dem Gestellelement ist vorteilhaft, da das Grillgutträgerelement zusammen mit dem Gestellelement verschwenkt werden soll. Hierbei soll jedoch sichergestellt sein, dass das Grillgutträgerelement während der Drehung in der vorher festgelegten Position verbleibt. Hierbei muss die kraftschlüssige Verbindung auf die durch die kontinuierliche Drehung dauerhaft auftretenden Kräfte ausgelegt sein, so dass ein Abrutschen verhindert wird, selbst wenn die Kontaktflächen mit einem Stoff mit Schmierwirkung, wie beispielsweise Fett, benetzt sind.

Besonders bevorzugt weist die Öffnung des ersten Teilbereichs des Grillgutträgers in einer horizontalen Richtung eine Länge auf, welche größer ausgestaltet ist, als die Dicke des Gestellelements. Durch diese Ausgestaltung wird sichergestellt, dass der Grillgutträger leichtgängig über das Gestellelement geführt werden kann, ohne vorzeitig zu Verkanten bzw. zu Verklemmen.

In einer weiteren bevorzugten Ausführungsform weist der erste Teilbereich des Grillgutträgers in einer Position der formschlüssigen Verbindung eine Neigung bezüglich der Normalenebene auf. Der erste Teilbereich ist demnach nicht horizontal ausgerichtet, sondern ist zum Herstellen einer Klemmverbindung geneigt. Durch ein solches Verklemmen wird eine sichere Verbindung erreicht.

Bevorzugt weist das Grillgutträgerelement einen zweiten Teilbereich auf, welcher zur Aufnähme des Grillguts selbst oder wenigstens zur Aufnahme eines Grillguttellers ausgestaltet ist. Hierfür kann der zweite Teilbereich zum Beispiel direkt als Grillgutteller ausgestaltet sein, welcher direkt das Grillgut aufnehmen kann. Vorzugsweise wird der zweite Teilbereich beispielsweise durch eine Aufnahmevorrichtung wie zwei Streben gebildet, welche einen separaten Grillgutteller aufnehmen können. Ein Vorteil der Ausgestaltung des zweiten Teilbereichs als Aufnahmeeinrichtung ist, dass der Grillgutteller einfacher und schneller austauschbar ist. Bei einer möglichen Beschädigung des Grillguttellers muss lediglich der Teller selbst und nicht das gesamte Grillgutträgerelement ausgewechselt werden. Weiterhin ist das Grillgutträgerelement hinsichtlich unterschiedlicher Arten des Grillguts variabler, da bei Änderung des Grillguts lediglich ein anderer Grillgutteller verwendet werden muss.

In einer weiteren bevorzugten Ausführung weist der zweite Teilbereich in einer horizontalen von dem Gestellelement weg weisenden Richtung eine Länge auf, die wenigstens dreimal so groß ist wie die Länge des ersten Teilbereichs in dieser Richtung. Durch die unterschiedlichen Größenverhältnisse wird die asymmetrische Gewichtsverteilung begünstigt. Weiterhin ermöglicht eine größere Länge des zweiten Teilbereiches ein Materialgewicht, das ausreichend ist, um eine ausreichende Haftreibung eines Innenbereiches der Öffnung an dem Gestellelement bereitzustellen, damit das Grillgutträgerelement in seiner Position an dem Gestellelement fixiert bleibt. Eine größere Länge des zweiten Teilbereiches ermöglicht auch einen zweiten Teilbereich, der groß genug ist, um ein entsprechend großes Grillgut aufzunehmen. Vorteilhaft ist für die Form des zweiten Teilbereiches eine Form, die in etwa einem Teller nachempfunden ist. Die Form des zweiten Teilbereiches ist jedoch nicht darauf beschränkt. Es ist denkbar, dass der erste und zweite Teilbereich zusammen in etwa die Form einer Zunge aufweisen, die sich von dem ersten Teilbereich ausgehend verbreitert und dann wieder in einer runden Form zusammenläuft. Auf diese Weise kann eine gute Halterung an dem Gestellelement mit einer für ein Grillgut vorteilhaften Oberfläche gleichzeitig gewährleistet sein. Weiterhin vorteilhaft ist auf diese Weise eine Entnahme des Grillgutes oder eine Bestückung mit Grillgut sehr einfach, da ein Aufnahmeraum des Grillgutes lediglich von einem Gestellelement verdeckt wird und so in einem 360° Grad Bereich das Grillgut von allen Seiten zugänglich ist.

Darüber hinaus ist es vorteilhaft, dass das wenigstens eine Grillgutträgerelement bevorzugt mit einem im Wesentlichen L-förmigen Abschnitt ausgebildet ist. Erfindungsgemäß sind unter "L-förmig" alle Abschnitte zu verstehen, die aus zwei Unterabschnitten, die unter einem Winkel zueinander stehen mit einem eckigen oder gerundeten Verbindungsstück.

Bevorzugt erstreckt sich der zweite Teilbereich in einer Position einer formschlüssigen Verbindung zwischen dem Grillgutträgerelement und dem Gestellelement im Wesentlichen in einer horizontalen Richtung. Eine solche horizontale Ausrichtung ist notwendig, damit ein Abrutschen des Grillguts, welches sich auf dem zweiten Teilbereich befindet, verhindert wird.

Besonders bevorzugt weist das Gestellelement ein weiteres Halteelement an der Unterseite des Gestellelements und/oder eine Führung in der Normalenebene auf. Eine Führung ist in diesem Bereich besonders vorteilhaft, um ein Schwingen des Gestells bei Rotation zu vermeiden.

In einer weiteren vorteilhaften Ausgestaltung ist das Gestellelement durch Ziehen hergestellt und weist einen gekrümmten Bereich auf. Dabei verjüngt sich das Profil in dem gekrümmten Bereich. Die Verjüngung tritt besonders bevorzugt an der Außenseite des Profils auf, also in dem Bereich der Krümmung, welcher den größten Krümmungsradius aufweist.

In einer bevorzugten Ausführungsform der Grillvorrichtung ist oberhalb des oberen Halteelements in Richtung der vertikalen Längsachse ein Wälzlager angeordnet. Dabei erstreckt sich ein Teil des oberen Halteelements in Richtung der vertikalen Längsachse nach oben und ist durch das Wälzlager geführt.

Bevorzugt weist der Teil des oberen Haltelements, welcher durch das Wälzlager geführt ist, zumindest eine Auflagefläche zur Auflage des Halteelements auf dem Wälzlager auf. Diese Auflagefläche kann auf dem inneren Ring des Wälzlagers aufliegen oder daran befestigt sein. Dies bietet den Vorteil, dass das Gewicht des Gestells von dem Lager getragen wird, was zu einer reduzierten Belastung des Antriebs führt.

Vorzugsweise umfasst die Grillvorrichtung eine Kupplung mit einem Kolben und einem Zylinder zur Übertragung einer rotatorischen Bewegung auf ein Gestell einer Grillvorrichtung. Erfindungsgemäß ist die Kupplung zwischen Kolben und Zylinder eine kraftschlüssige Kupplung. Besonders bevorzugt handelt es sich bei der kraftschlüssigen Kupplung um eine Rutschkupplung. Eine solche Kupplung bietet einen erheblichen Sicherheitsvorteil, da diese bei Überschreiten einer Maximalkraft selbsttätig auskoppelt. In dem Fall, dass der Bediener zum Beispiel mit seiner Hand oder seinem Arm zwischen zwei rotierende Grillgutträger gerät, koppelt die Kupplung aus und stoppt so die Rotation der Grillgutträger.

In einer bevorzugten Ausführungsform der Kupplung weisen der Kolben und der Zylinder einen in Axialrichtung rotationssymmetrischen Querschnitt auf.

Außerdem weist die Kupplung eine Anzahl an Schleifflächen auf, welche zur Herstellung eines definierten Kraftschlusses zwischen Kolben und Zylinder geeignet sind. Weiterhin ist die Anzahl an Schleifflächen in dem Kolben oder dem Zylinder radialbeweglich angeordnet, wobei die Schleifflächen einen Kraftschluss durch eine Andrückkraft in radialer Richtung erzeugen.

In einer weiteren bevorzugten Ausführungsform ist die Anzahl an Schleifflächen mit einem Andrückelement verbunden, welches die Schleifflächen mit einer vordefinierten Kraft beaufschlagt. Dabei sind bevorzugt bei Überschreiten eines definierten Schwellwerts der Andrücckraft der Kolben und der Zylinder gegeneinander beweglich. Bei dem Andrückelement kann es sich beispielsweise um eine Feder handeln, deren Federkonstante derart festgelegt ist, um die notwendige Kraft zu erzeugen.

Bevorzugt ist eine Unterseite des Kolbens als Schleiffläche ausgebildet, welche in axialer Richtung beweglich ist und durch welche ein Kraftschluss in axialer Richtung erzeugbar ist.

Weiterhin ist bevorzugt eine Arretiervorrichtung vorgesehen, durch welche die Schleifflächen in einer Position arretierbar sind, in welcher kein Kraftschluss hergestellt ist.

In einer weiteren bevorzugten Ausführungsform ist die Kupplung durch ein Element zur thermischen Isolierung von einer Grillvorrichtung thermisch entkoppelt. Dieses Element zur thermischen Isolierung kann in einer bevorzugten Ausführungsform gleichzeitig als Auflageelement ausgebildet sein.

Mit der Grillvorrichtung kann ein Grillgutteller verwendet werden. Der Grillgutteller ist mit einer Führung an der Unterseite versehen, welche an die Form des zweiten Teilbereichs des Grillgutträgers angepasst ist, wodurch der Grillgutteller an dem zweiten Teilbereich des Grillgutträgerelements anbringbar ist. Bei der Führung kann es sich um eine Anzahl an länglichen Vertiefungen handeln, falls der zweite Teilbereich durch Streben ausgebildet ist. Allerdings sind auch anders geformte Aussparungen denkbar, welche an die jeweilige Ausgestaltung des zweiten Teilbereichs angepasst sind.

In einer bevorzugten Ausführungsform weist der Grillgutteller wenigstens eine Erhebung zum Halten eines Grillguts mit einem Hohlraum auf. Die Erhebungen können unter anderem Zapfen sein, welche in das Grillgut eingeführt werden. Diese Zapfen können auch beheizt sein, um das Grillgut auch von innen zu erwärmen, was zu einem gleichmäßigeren Garen führen kann.

In einer bevorzugten Ausführungsform sind Gestell, Gestellelement sowie Halteelement aus Metall, beispielsweise aus Edelstahl oder Aluminium, ausgebildet. Darüber hinaus ist denkbar, dass die Oberflächen der Gestellelemente sowie der Halteelemente physikalisch und/oder chemisch modifiziert ausgebildet sind und beispielsweise oberflächenbehandelt oder oberflächenbeschichtet eingesetzt werden. Dies ist insbesondere bei dem Kontakt mit Lebensmitteln von Vorteil, da durch die Oberflächenbehandlung das Bakterienwachstum sowie das Pilzwachstum gehindert wird, sodass das Gestell antimikrobiell und/oder desinfizierbar ist. Ferner ist denkbar, dass Gestell, Gestellelement sowie Halteelemente als Drahtbiegekonstruktion ausgebildet sind.

Darüber hinaus umfasst die erfindungsgemäße Grillvorrichtung wenigstens ein Grillgutträgerelement zur Aufnahme des Grillguts. Dies ist vorteilhaft, da somit das Grillgut in der Grillgutvorrichtung anordenbar ist und während eines Grillvorgangs gegart werden kann.

Bei einer weiteren vorteilhaften Ausführungsform sind wenigstens ein, bevorzugt mehrere, Grillgutträgerelemente vertikal voneinander beabstandet an dem Halterahmen angeordnet. Dies ist vorteilhaft, da insbesondere jedes Grillgutträgerelement bevorzugt ein Grillgut, beispielsweise ein Grillhähnchen, aufnimmt. Sind mehrere derartige Grillgutträgerelemente an dem Halterahmen angeordnet, können mehrere Grillhähnchen gleichzeitig gegrillt werden.

Bevorzugt können die Grillgutträgerelemente derart voneinander beabstandet angeordnet sein, dass die jeweiligen Grillgüter zueinander kontaktfrei angeordnet sind. Dies ist vorteilhaft, da somit das Grillgut von allen Seiten gegrillt werden kann und rohe Halsbereiche, wie sie durch das enge bestücken der Grillspieße aus dem Stand der Technik bekannt sind, vermieden werden. Dies ist zusätzlich vorteilhaft, da durch die Beabstandung des Grillguts voneinander eine schnelle Entnahme von jedem einzelnen Grillgut sowie eine schnelle Neubestückung mit rohem Grillgut ermöglicht wird. Je nach Grillgutgröße kann das Grillgut, insbesondere ein Grillhähnchen, einzeln der Grillvorrichtung entnommen werden, ohne dass das restliche Grillgut hierdurch beeinträchtigt wird. Ist ein kleineres Grillhähnchen gar, so kann es direkt entnommen werden, um eine saftige Fleischqualität zu gewährleisten. Das restliche Grillgut, also größere, schwerere Grillhähnchen, welche noch nicht gar sind, verbleiben derweil in der Grillvorrichtung und werden weiter gegrillt. Dies bringt sowohl einen Zeitvorteil als auch einen reduzierten Arbeitsaufwand mit sich.

Vorteilhafterweise weist das Gestellelement eine Vielzahl an vertikal voneinander beabstandeten Vertiefungen auf, welche im einfachsten Fall bevorzugt als Führungsnuten ausgebildet sind. In diese Vertiefungen ist das wenigstens eine Grillgutträgerelement zumindest teilweise einführbar und lösbar fixiert. Je nach Ausbildung können diese Vertiefungen gleiche oder auch voneinander verschiedene Abstände zueinander aufweisen. Diese variable Anordnung des wenigstens einen Grillgutträgerelementes ist insbesondere vorteilhaft, wenn unterschiedlich großes Grillgut gegrillt werden soll. Vorteilhaft sind mehrere Grillgutträgerelemente, bevorzugt zwei bis zehn Grillgutträgerelemente an dem Halterahmen angeordnet. Weiterhin bevorzugt sind die Grillgutträgerelemente im Bereich von 10 - 30 cm vertikal voneinander beabstandet angeordnet.

Vorteilhafterweise können die Vertiefungen eine weitere Stützfunktion zu der Haftreibung bereitstellen. Bevorzugt sind sie als Einkerbungen auf einer Seite des Gestellelementes, die zu den zweiten Teilbereichen gerichtet ist und auf einer davon abgewandten Seite des Gestellelements angeordnet. Dies bewirkt eine besonders einfache und zugleich stabile Stützfunktion.

In einer weiteren vorteilhaften Ausführungsform ist das Gestellelement als Vierkantrohr mit bevorzugt quadratischem Querschnitt und besonders bevorzugt abgerundeten Ecken ausgebildet. Dies ist vorteilhaft, da dies eine einfache Ausführungsform ist, die gleichzeitig der Funktionalität besonders dienlich ist. Auf diese Weise ist es möglich, die Öffnung an dem ersten Teilbereich rechteckförmig mit einer Seite, die einer Länge des Vierkantrohres entspricht sowie einer längeren Seite ausgebildet ist. In einer geneigten Position passt sich dann auch die längere Länge dem quadratischen Vierkantrohr an. Auf diese Weise kann die Bedingung, dass eine geneigte Position des ersten Teilbereiches zu der vertikalen Längsachse existiert, in der die Öffnung formschlüssig zu dem Gestellelement und der zweite Teilbereich senkrecht zu der vertikalen Längsachse ist, besonders einfach realisiert werden. Vorteilhaft ist es denkbar, dass Vertiefungen als Einkerbungen in unterschiedlicher Höhe ausgebildet sind. Dabei ist vorteilhaft eine Einkerbung dem zweiten Teilbereich zugewandt an dem Gestellelement und eine von dem zweiten Teilbereich abgewandt an dem Gestellelement. Der Höhenunterschied wird vorteilhaft derart angepasst, dass eine schräge Verbindung der beiden Einkerbungen exakt einer zweiten Rechtecklänge der Öffnung entspricht. Auf diese Weise können gestufte Höheneinstellungen des Grillgutträgerelements gewährleistet werden. Selbstverständlich ist eine Form des Gestellelements nicht auf die Form eines Vierkantrohres beschränkt. So ist auch die Form eines runden Rohres, die Form eines rechteckigen Rohres oder die Form eines elliptischen Rohres möglich. Auch sämtliche andere vorstellbare Profilformen sind denkbar. Beispielsweise kann die Form eines Gestellelementes zu Werbezwecken auch einer Trickfigur angepasst werden. Anstelle eines Rohres kann auch eine Vollstange verwendet werden. Dies erhöht vorteilhaft eine Stabilität. Die abgerundeten Ecken sind vorteilhaft, da auf diese Weise einer Verletzungsgefahr vorgebeugt wird.

In einer weiteren vorteilhaften Ausführungsform ist an dem Gestellelement umfangsseitig unter dem Grillgutträgerelement eine Wölbung, bevorzugt in Form eines Gummirings, angeordnet, die größer als die Öffnung ist und eine Verschiebung des Grillgutträgerelements von unten begrenzt. Vorteilhaft wird damit die Sicherheit der Grillvorrichtung erhöht. Sollte das Grillgutträgerelement bei einem vertikalen Verstellen einmal abrutschen, kann es maximal bis zu der Wölbung hinunterrutschen und wird von dieser aufgefangen. Ein Gummiring ist darüber hinaus vorteilhaft, da er zusätzlich noch abfedernd wirkt.

In einer weiteren vorteilhaften Ausführungsform weisen die Halteelemente wenigstens einen horizontalen Abschnitt und bevorzugt weiterhin einen abgerundeten Abschnitt auf, der als Verlängerung des vertikalen Gestellelementes dieses mit dem horizontalen Abschnitt verbindet. Ein horizontaler Abschnitt erlaubt vorteilhaft eine Beabstandung des Gestellelementes von einer Rotationsaufhängung. Auf diese Weise kann eine Rotation in etwa um einen Schwerpunkt der Grillvorrichtung ermöglicht werden. Eine abgerundete Verbindung des horizontalen Abschnittes des Halteelementes mit dem vertikalen Gestellelement ist darüber hinaus materialsparend.

In einer weiteren vorteilhaften Ausführungsform sind die Halteelemente als Vierkantrohr mit bevorzugt quadratischem Querschnitt und besonders bevorzugt abgerundeten Ecken ausgebildet und weisen an ihrem Ende einen zylinderförmigen Abschnitt auf, dessen Durchmesser bevorzugt kleiner als eine Seitendicke des Vierkantrohres ist. Auch hier ist die Form der Halteelemente nicht auf die quadratische Form beschränkt. Eine rechteckförmige Form, eine elliptische Form sowie jede andere denkbare Form ist möglich. Eine Vierkantform ist jedoch vorteilhaft, da sie besonders leicht herstellbar ist. Weiterhin gestattet ein zylinderförmiger Abschnitt an dem Ende der Halteelemente eine besonders vorteilhafte Aufhängung der Vorrichtung.

In einer weiteren vorteilhaften Ausführungsform ist jeweils eine Augenschraube mit ihrem Auge über dem zylinderförmigen Abschnitt zur rotierbaren Befestigung des Gestells und die vertikale Längsachse angeordnet. Eine Augenschraube ist besonders einfach und gleichzeitig stabil. Sie ermöglicht eine besonders passgenaue Anordnung des Auges der Augenschraube an dem zylinderförmigen Abschnitt.

Bei einer weiteren vorteilhaften Ausführungsform umfasst das wenigstens eine Grillgutträgerelement wenigstens eine Grillgutträgerschale zur Aufnahme von Grillflüssigkeit während des Grillvorgangs. Dies ist insbesondere von Vorteil, da die Grillgutträgerschale die Fleischsäfte und das flüssige Fett, welches während des Grillens von dem Grillgut austritt, auffängt und ein Heruntertropfen auf weiteres, darunter angeordnetes Grillgut verhindert. Somit wird eine Geschmacksbeeinträchtigung ausgeschlossen und die Hygiene verbessert. Im einfachsten Fall ist die Grillgutträgerschale lösbar auf dem Grillgutträgerelemente angeordnet. Dies ermöglicht vorteilhaft eine schnelle Entnahme des fertigen Grillguts mit der Grillgutträgerschale sowie eine schnelle Neubestückung mit rohem Grillgut. In einem vorbereitenden Schritt werden die Grillgutträgerschalen mit bevorzugt jeweils einem Grillhähnchen bestückt, und bei Bedarf wird die fertige Grillgutträgerschale auf dem korrespondierendem Grillgutträgerelement angeordnet.

Zur lösbaren Anordnung der wenigstens einen Grillgutträgerschale auf dem wenigstens einen Grillgutträgerelement erweist es sich als vorteilhaft, wenn das Grillgutträgerelement eine zumindest teilweise umfangsseitige, sich in vertikaler Richtung erstreckende Erhebung aufweist. Diese bevorzugt als Randbereich ausgebildete Erhebung dient der Halterung der wenigstens einen Grillgutträgerschale und verhindert deren Abrutschen von dem Griiigutträgerelement während des Grillvorgangs. Neben derartigen Erhebungen sind auch weitere Halterungselemente denkbar, wie beispielsweise Führungsnuten oder anderweitige Vertiefungen, welche die wenigstens eine Grillgutträgerschale während des Grillvorgangs auf dem Grillgutträgerelement halten.

Bevorzugt umfasst jedes vorgesehene Grillgutträgerelement eine korrespondierende Grillgutträgerschale. Die Grillgutträgerschalen sind bevorzugt aus Metall, beispielsweise Edelstahl oder Aluminium, oder auch aus hitzebeständigem Kunststoff ausgebildet.

Ferner wäre es auch denkbar, das wenigstens ein Grillgutträgerelement netzförmig und/oder schwammartig auszubilden, so dass Fleischsäfte und flüssiges Fett von dem wenigstens einem Grillgutträgerelement aufnehmbar und speicherbar sind. Hierzu kann das wenigstens eine Grillgutträgerelement beispielsweise mehrlagig ausgebildet sein und zwei netzartige Deckschichten, beispielsweise aus Metall, sowie eine dazwischen angeordnete Saugschicht, bevorzugt aus natürlichen und/oder künstlichen Materialien wie beispielsweise Vlies, Fasern oder aufgeschäumten Kunststoffen, umfassen.

Vorteilhaft weist die wenigstens eine Grillgutträgerschale einen sich nach oben erweiternden, umfangsseitig erstreckenden Randbereich auf. Die wenigstens eine Grillgutträgerschale weist somit eine sich nach oben erweiternde Öffnung auf, welche bevorzugt einen Durchmesser von 10 - 30 cm, bevorzugt von 12 - 22 cm, aufweist. Die im Vergleich zur Öffnung kleinere Grundfläche der Grillgutträgerschale weist bevorzugt einen Durchmesser im Bereich von 8 - 25 cm, mehr bevorzugt von 10 - 20 cm, auf. Je nach Art des Grillguts kann der zwischen Randbereich und Grundfläche angeordnete Mantelbereich unterschiedlich hoch ausgebildet sein. Selbstverständlich ist auch denkbar, dass Öffnung und Grundfläche den gleichen Durchmesser aufweisen oder auch, dass die Öffnung kleiner als die Grundfläche ausgebildet ist. Dies ist vorteilhaft, da ein sich konisch nach oben verjüngender Mantelbereich als Spritzschutz wirkt und Fleischsäfte und Fette spritzsicher aufgefangen werden. Wird auf eine separate Grillgutträgerschale verzichtet, so ist das wenigstens eine Grillgutträgerelement selbst als Grillgutträgerschale ausgebildet und weist eine sich nach oben erweiternde Öffnung auf, welche bevorzugt einen Durchmesser von 10 - 30 cm, bevorzugt von 12 - 22 cm, aufweist. Die im Vergleich zur Öffnung kleinere Grundfläche des schalenartigen Grillgutträgerelements weist bevorzugt einen Durchmesser im Bereich von 8 - 25 cm, mehr bevorzugt von 10 - 20 cm, auf. Je nach Art des Grillguts kann der zwischen Randbereich und Grundfläche angeordnete Mantelbereich unterschiedlich hoch ausgebildet sein. Selbstverständlich ist auch denkbar, dass Öffnung und Grundfläche den gleichen Durchmesser aufweisen oder auch, dass die Öffnung kleiner als die Grundfläche ausgebildet ist.

Vorteilhaft umfasst das wenigstens eine Grillgutträgerelement wenigstens ein Positionierungsmittel zur lösbaren Anordnung wenigstens eines Stützelements innerhalb des Grillgutträgerelements. Bevorzugt weist die wenigstens eine Grillgutträgerschale ein derartiges Positionierungsmittel zur lösbaren Anordnung wenigstens eines Stützelements innerhalb der Grillgutträgerschale auf. Dies ist vorteilhaft, da die Grillgutträgerschale für ein gleichmäßiges Grillen und Durchgaren des Grillgutes nicht ausreicht, da immer eine Seite des Grillgutes aufliegt und somit schlecht bzw. gar nicht mitgegrillt wird. Aus diesem Grund ist es besonders vorteilhaft, wenigstens ein Stützelement vorzusehen, auf welchem das Grillgut angeordnet ist. Um das Stützelement an dem Grillgutträgerelement, bevorzugt an der Grillgutträgerschale, lösbar zu fixieren, ist vorteilhaft, wenigstens ein Positionierungsmittel vorgesehen, mittels welchem das Stützelement in der bestmöglichen Grillposition für das Grillgut lösbar angeordnet werden kann.

Vorteilhaft umfasst das Stützelement wenigstens eine Bodenplatte sowie eine daran angeordnete schaftartige Verlängerung. Dies ist vorteilhaft, da bevorzugt die Bodenplatte als Kontaktfläche zu dem entsprechenden Grillgutträgerelement, bevorzugt zu der Grillgutträgerschale, ausgebildet ist und somit zur Stabilisierung des gesamten Stützelementes dient. Die an der Bodenplatte angeordnete schaftartige Verlängerung weist eine sich in vertikaler Richtung nach oben erstreckende Verlängerung auf, auf welche das Grillgut bevorzugt von oben nach unten aufsteckbar ist. Folglich ist das Grillgut, insbesondere das Grillhähnchen, in dieser Ausführungsform ebenfalls vertikal in seiner Längsrichtung angeordnet. Durch die schaftartige Verlängerung ist das Grillgut bevorzugt kontaktfrei mit dem Grillgutträgerelement, bevorzugt mit der Grillgutträgerschale, ausgebildet, sodass ein gleichmäßiges, schnelles Grillen und Durchgaren ermöglicht wird, wenn sich die Grillvorrichtung während des Grillens um seine vertikale Längsachse rotiert.

Ferner erweist es sich als vorteilhaft, jedem Grillgutträgerelement lediglich ein Stützelement zuzuweisen, sodass folglich zu jedem Grillgutträgerelement auch nur ein Grillgut anordbar ist. Dies ist vorteilhaft, da durch das aufrechte Grillen des Grillguts der Grillvorgang verkürzt werden kann, da im Gegensatz zu den bekannten, voll bestückten Spießen aus dem Stand der Technik das Grillgut auch im Hals- und Brustbereich gleichmäßig mitgegart werden kann. Im Stand der Technik erweist sich der vollbestückte Grillspieß häufig als nachteilig, da insbesondere Hals- und Oberbrustbereich des Grillhähnchens durch das direkt benachbart angeordnete, weitere Grillhähnchen abgeschirmt werden, sodass längere Grillzeiten bedingt werden, wodurch auch die Fleischqualität leidet und das Hühnerfleisch austrocknet.

Ferner ist denkbar, die schaftartige Verlängerung im einfachsten Ausführungsbeispiel zylindrisch auszubilden, wobei das freie nach oben gerichtete Ende geschlossen und bevorzugt als Halbkugel abgerundet ausgebildet ist. Darüber hinaus ist auch denkbar, dass die schaftartige Verlängerung als eine sich nach unten erweiternden Glockenform ausgebildet ist, sodass das Grillgut eine möglichst große gemeinsame Kontaktfläche mit der schaftartigen Verlängerung aufweist. Dies ist vorteilhaft, da hierdurch die Grillzeiten ebenfalls verkürzt werden. Selbstverständlich ist die Ausbildung der schaftartigen Verlängerung nicht auf die zylindrische oder glockenförmige Form beschränkt, sondern ist beliebig nach Form des Grillguts veränderbar. Darüber hinaus ist denkbar, dass mehrere schaftartige Verlängerungen vorgesehen sind, bevorzugt zwei bis acht, mehr bevorzugt drei bis fünf. In einer bevorzugten Ausführungsform sind diese schaftartigen Verlängerungen zylindrisch ausgebildet und weisen bevorzugt ein einseitig abgeschrägtes, nach oben ragendes freies Ende auf. Dies ist besonders vorteilhaft bei der Anordnung des Grillgutes und dessen Fixierung während des Grillvorgangs. Weiterhin bevorzugt sind die freien Ende Richtung der schaftartigen Verlängerungen zur vertikalen Mittelachse des Grillgutträgerelements hin abgeschrägt.

Bevorzugt weist die schaftartige Verlängerung eine vertikale Länge im Bereich von 7 - 25 cm, bevorzugt von 10 - 18 cm, auf und eine horizontale Breite im Bereich von 2 - 8 cm, bevorzugt im Bereich von 3 - 6 cm.

Vorteilhaft ist das wenigstens eine Positionierungsmittel als wenigstens ein sich vertikal nach oben erstreckenden Vorsprung, bevorzugt mehrere derartiger Vorsprünge, welche voneinander beabstandet angeordnet sind, ausgebildet. Bevorzugt ist der wenigstens eine sich vertikal nach oben erstreckende Vorsprung eckig, pyramidal oder auch abgerundet ausgebildet. Bevorzugt sind mehrere derartiger Vorsprünge vorgesehen, um eine stabile Fixierung des Stützelements an dem Grillgutträgerelement zu ermöglichen. Bevorzugt ist wenigstens ein derartiger Vorsprung, mehr bevorzugt 2 - 15 derartiger Vorsprünge, meist bevorzugt 3 - 7 derartige Vorsprünge vorgesehen, welche in unterschiedlichen Geometrien angeordnet sein können. So ist beispielsweise denkbar, dass mehrere Vorsprünge in Reihe, in einer Kreisform, als Rechteck oder in jeder anderen möglichen Geometrie angeordnet sind.

Vorteilhaft weist das wenigstens eine Stützelement wenigstens eine Ausnehmung auf, welche komplementär zu dem wenigstens einen Positionierungsmittel des Grillgutträgerelements, bevorzugt der Grillgutträgerschale, ausgebildet ist, sodass Letzteres zur lösbaren Fixierung von Stützelement und Grillgutträgerelement, bevorzugt an Grillgutträgerschale, aneinander zumindest teilweise in die wenigstens eine Ausnehmung einführbar ist. Dies ist vorteilhaft, da somit eine lösbare Fixierung von Stützelement und Grillgutträgerelement, bevorzugt Grillgutträgerschale, vorgesehen ist. Bevorzugt ist die wenigstens eine Ausnehmung in der Bodenplatte des Stützelements vorgesehen oder aber auch direkt an dem unteren freien Ende der schaftartigen Verlängerung. Je nach Ausbildung der Positionierungsmittel ist denkbar, dass für jedes Positionierungsmittel eine hierzu komplementär ausgebildete Ausnehmung im Stützelement vorgesehen ist. Darüber hinaus ist auch denkbar, dass mehrere Positionierungsmittel in nur einer Ausnehmung anordbar sind.

Bevorzugt sind Stützelement, Grillgutträgerelement, Grillgutträgerschale sowie Positionierungsmittel aus Metall ausgebildet, bevorzugt aus Edelstahl oder Aluminium. Zur besseren Reinigung ist ferner denkbar, die Oberfläche der Elemente und/oder des Positionierungsmittels physikalisch und/oder chemisch zu modifizieren.

Bevorzugt ist das Stützelement bevorzugt aus Wärme leitfähigem Material ausgebildet. Dies ist insbesondere vorteilhaft, da somit das Grillgut nicht nur von außen mit Wärme beaufschlagt wird, sondern zeitgleich auch von innen heraus gegart wird. Hierzu ist es von Vorteil, wenn die schaftartige Verlängerung des Stützelements zumindest teilweise, bevorzugt vollständig, eine direkte Kontaktfläche mit dem Grillgut aufweist. Dies ist allerdings nicht zwangsläufig nötig, da auch die von der schaftartigen Verlängerung emittierten Wärmestrahlung indirekt zum Garvorgang beiträgt. Hierdurch wird die Grillzeit verkürzt, da das Grillgut nicht nur von außen, sondern von innen eine Temperaturbeaufschlagung erfährt. Bevorzugt ist die geometrische Form der schaftartigen Verlängerung der innenliegenden Fläche des Grillguts, welche mit der schaftartigen Verlängerung zumindest teilweise eine gemeinsame Kontaktfläche aufweist, angepasst.

Durch die vorteilhafte direkte und/oder indirekte Temperaturzuführung von innen erfolgt ein gleichmäßiges, sanftes Garen des Grillgutes, sodass die Grillzeiten verkürzt werden.

Darüber hinaus ist denkbar, dass das Stützelement, bevorzugt die wenigstens eine schaftartige Verlängerung, wenigstens einen Temperatursensor aufweist, welcher zur Temperaturerfassung im Innenraum des Grillgutes dient. Hierdurch wird der Grillvorgang effektiver gestaltet, da beispielsweise ab einem bestimmten Temperaturschwellwert im Innenraum des Grillguts festgestellt werden kann, wann die Garzeit erreicht wird und das Grillgut nicht trocken gegrillt wird.

Ferner erweist es sich als vorteilhaft, bei mehreren schaftartigen Verlängerungen in jeder der schaftartigen Verlängerungen wenigstens einen Temperatursensor vorzusehen. Dies ist vorteilhaft für die Ermittlung des gleichmäßigen Garprozesses und der Ermittlung, wann das Grillgut fertig durchgegart ist. Darüber hinaus ist denkbar, dass das Stützelement, bevorzugt die wenigstens eine schaftartige Verlängerung oder auch mehrere schaftartige Verlängerungen, wenigstens ein Heizelement aufweist/aufweisen, welches innerhalb der jeweiligen schaftartigen Verlängerung zum indirekten Grillen vorgesehen ist. Durch dieses wenigstens eine Heizelement, welches beispielsweise als Heizdraht ausgebildet ist, wird das Grillgut von innen mit einer zusätzlichen Temperatur beaufschlagt, sodass der Grillvorgang schneller abgeschlossen ist. Dies ist zudem vorteilhaft, da Verbrennungen und Austrocknen des Fleisches verhindert wird.

Vorteilhaft wird ein Grillgerät zum Grillen von Grillgut, insbesondere Geflügel, umfassend ein Grillgehäuse mit wenigstens einem Heizelement, wenigstens eine Grillvorrichtung nach wenigstens einem der voran gegangenen Ansprüche 1 - 10, wenigstens eine Antriebseinrichtung zur Rotation der Grillvorrichtung sowie wenigstens eine Aufnahmeeinrichtung zur lösbaren Fixierung der Grillvorrichtung an dem Grillgehäuse, beansprucht. Um die oben beschriebene Grillvorrichtung zu verwenden, bedarf es eines bevorzugt ausgebildeten Grillgehäuses mit wenigstens einem Heizelement.

Wird in einer ersten Ausführungsform das Grillgerät lediglich mit einer Grillvorrichtung bestückt, so ist das Grillgehäuse, welches die wenigstens eine Grillvorrichtung zumindest teilweise umgibt, bevorzugt U-förmig ausgebildet. Dies ist vorteilhaft, da somit während der Rotation der vertikalen Grillvorrichtung das Grillgut von drei Seiten mit Wärme beaufschlagt wird und eine Auskühlung nahezu verhindert wird. Vorteilhaft wird die Grillvorrichtung außerhalb des Grillgehäuses mit dem Grillgut bestückt und bevorzugt mittels Spannmechanismus oder Rastmechanismus an der Aufnahmeeinrichtung des Grillgehäuses fixiert, um dann mittels der wenigstens einen Antriebseinrichtung, beispielsweise eines Motors, in Rotation versetzt zu werden.

Sind mehrere Grillvorrichtungen vorgesehen, welche bevorzugt nebeneinander im gleichen Abstand zueinander angeordnet sind, so ist das Grillgehäuse bevorzugt als flächiges Wandelement ausgebildet, in welchem das wenigstens eine, bevorzugt mehrere Heizelemente verlaufen. Vorteilhaft ist der Grillgehäuse an seiner nicht beheizten, offenen Vorderseite mit wenigstens einem beweglichen, scheibenartigem Element verschließbar angeordnet. Bevorzugt ist das scheibenartige Element als Seitenfläche des Grillgehäuses schwenkbar ausgebildet, so dass der Grillraum innerhalb des Grillgehäuses, in welchem die wenigstens eine Grillvorrichtung angeordnet ist, verschließbar ist. Dies ist vorteilhaft, da somit die von den Heizelementen abgegebene Wärme innerhalb des Grillgehäuses gehalten wird und der Grillvorgang somit schneller und effizienter erfolgt.

Ferner wäre denkbar, dass das Grillgehäuse zwei derartige flächige Wandelemente aufweist, welche bevorzugt parallel zueinander beabstandet angeordnet sind und zwischen welchen die vertikal rotierenden Grillvorrichtungen angeordnet sind. Dies ist vorteilhaft, da durch die beidseitige Temperaturbeaufschlagung in Kombination mit der Rotation um die vertikale Längsachse jeder Grillvorrichtung ein schnelles und kostensparendes Grillen ermöglicht ist.

Als Antriebseinrichtung zur Rotation der Grillvorrichtung ist bevorzugt ein Motorantrieb vorgesehen oder auch ein Ketten- oder Bandantrieb denkbar. Sind mehrere Grillvorrichtungen vorgesehen, so erweist es sich als vorteilhaft, die in Reihe zueinander angeordneten Grillvorrichtungen mittels Bandantrieb, beispielsweise mittels eines Zahnriemens, alle mit der gleichen Rotationsgeschwindigkeit zu beaufschlagen. Ferner ist auch denkbar, dass die einzelnen in Reihe zueinander angeordneten Grillvorrichtungen mit jeweils einem Antrieb ausgestattet sind, so dass in Abhängigkeit des Grillgutes die einzelnen Grillvorrichtungen mit verschiedenen Rotationsgeschwindigkeiten beaufschlagt werden. Je nach Ausführungsform ist die Antriebseinrichtung am vertikal oberen Ende und/oder am vertikal unteren Ende der Grillvorrichtung anordbar.

Die Fixierung der jeweiligen Grillvorrichtung an der Aufnahmeeinrichtung erfolgt bevorzugt mittels Schraubmechanismus, Klickmechanismus oder auch Bajonettmechanismus. Darüber hinaus ist denkbar, dass die jeweilige Grillvorrichtung an dem Halterahmen wenigstens einer Aussparung aufweist, welche bevorzugt von einem Haltemittel, beispielsweise ein hakenartiges Element, zumindest teilweise umgriffen wird, so dass die jeweilige Grillvorrichtung über das Haltemittel mit der Aufnahmeeinrichtung verbunden ist. Hierbei umfasst die Grillvorrichtung zudem vorteilhaft weiterhin wenigstens einen Vorsprung an dem der Antriebseinrichtung gegenüberliegenden freien Ende. Bevorzugt ist dieser wenigstens eine Vorsprung stiftartig und/oder stegartig ausgebildet und kann beispielsweise einen runden Querschnitt oder einen ellipsoidalen Querschnitt aufweisen. Ferner ist vorteilhaft, dass der wenigstens eine Vorsprung fest an dem entsprechenden Verbindungselement angeordnet ist. Meist bevorzugt ist der wenigstens eine Vorsprung als Führungspin und/oder Widerlager ausgebildet. Dies ist bevorzugt, da somit eine vertikale Rotation der Grillvorrichtung während des Grillvorgangs ermöglicht wird. Vorteilhaft erfolgt die Lagerung der Grillvorrichtung derart, dass keine exzentrischen Kräfte bedingt werden.

Vor der Bestückung der Grillvorrichtung mit Grillgut wird der wenigstens eine Vorsprung der Grillvorrichtung zunächst in eine hierzu bevorzugt komplementär ausgebildete Ausnehmung und/oder Öffnung des Grillgerätes eingeführt. Um eine leichte, gleichmäßige Rotation zu gewährleisten, ist zwischen Vorsprung und Wandung der Ausnehmung und/oder der Öffnung des Grillgeräts ein zusätzliches freies Volumen vorgesehen, innerhalb welchem der wenigstens eine Vorsprung rotierbar ist. Meist bevorzugt sind pro Grillvorrichtung ein Vorsprung, welcher weiterhin bevorzugt als Führungspin und/oder als Widerlager ausgebildet ist, sowie eine hierzu komplementär ausgebildete Öffnung und/oder Ausnehmung vorgesehen. Dies bedingt eine einfache Rotation der Grillvorrichtung um die vertikale Längsachse. Je nach Ausführungsform kann der wenigstens eine Vorsprung an dem vertikal nach unten ausgerichteten freien Ende der Grillvorrichtung und/oder an dem vertikal nach oben ausgerichteten freien Ende der Grillvorrichtung angeordnet sein, wobei am anderen, gegenüberliegenden zweiten freien Ende der Grillvorrichtung bevorzugt die Aufnahmeeinrichtung bzw. die Antriebseinrichtung angeordnet ist.

Weiterhin bevorzugt ist, dass der Halterahmen der Grillvorrichtung ein Kupplungselement, bevorzugt eine Schnellkupplung, meist bevorzugt eine Rutschkupplung, aufweist, mittels welcher die Antriebseinrichtung in lösbarer Verbindung steht. Meist bevorzugt ist die Rutschkupplung mechanisch mit Reibkörpern, hydraulisch, elektrisch, magnetisch, als Riemenantrieb und/oder einer Kombination hieraus ausgebildet.

Alle offenbarten Merkmale der einzelnen Elemente der Grillvorrichtung sind sowohl auf Grillvorrichtungen mit lediglich einem Halterahmenelement als auch auf Grillvorrichtungen mit zwei Halterahmenelementen beliebig übertragbar und kombinierbar.

Darüber hinaus erweist es sich als vorteilhaft, wenn der Halterahmen aus aneinander lösbaren Einzelteilen zusammengesetzt ist. So ist beispielsweise denkbar, dass wenigstens eine Halterahmenelement lösbar an dem ersten und/oder zweiten Verbindungselement anordbar ist. Die lösbare Fixierung ist bevorzugt als Steckverbindung, Schraubverbindung, Bajonettverbindung oder dergleichen ausgebildet. Diese Ausführung erweist sich als vorteilhaft, um das wenigstens eine Halterahmenelement schnell zu entnehmen und beispielsweise zu reinigen oder zu desinfizieren.

Die hier beschriebene Grillvorrichtung zum Grillen von Grillgut ist neben Geflügel auch bevorzugt für Haxen, Backschinken oder dergleichen ausgebildet.

Ferner erweist es sich als vorteilhaft, die Grillgutträgerelemente mit einer speziell hierfür vorgesehenen Zange zu entnehmen. Die Zange ist hierfür derart ausgebildet, dass sie im gegriffenen Zustand die Bodenplatte in der Grillgutträgerschale derart fixiert, dass diese auch bei einer Schrägstellung der Grillgutträgerschale in dieser gehalten wird. Dies ist insbesondere von Vorteil, wenn aus dem Grillgut heraus gelaufene Flüssigkeit aus der Grillgutträgerschale abgeführt werden soll. Diese lösbare Fixierung ist unabhängig von dem Neigungswinkel der Grillgutträgerschale.

Weitere Ziele, Merkmale und Anwendungsmöglichkeiten der vorliegenden Erfindung ergeben sich aus der beiliegenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder in deren Rückbeziehung.

Es zeigen:
Fig. 1 eine schematische Zeichnung der Grillvorrichtung;
Fig. 2 eine perspektivische Ansicht der Grillvorrichtung;
Fig. 3 eine perspektivische Ansicht einer Augenschraube, einem zylinderförmigen Abschnitt am Ende eines Halteelementes sowie eine Klemmfeder;
Fig. 4 einen schematischen Querschnitt einer Ausführungsform einer Grillvorrichtung;
Fig. 5 einen schematischen Querschnitt einer weiteren Ausführungsform einer Grillvorrichtung;
Fig. 6 einen schematischen Querschnitt einer weiteren Ausführungsform einer Grillvorrichtung;
Fig. 7 ein beispielhaftes Grillgerät; und
Fig. 8 einen Querschnitt eines beispielhaften Grillgutträgerelements mit darin angeordnetem Stützelement;
Fig. 9a, 9b eine weitere Ausführung eines Stützelements;
Fig. 10 ein weiteres beispielhaftes Grillgerät;
Fig. 11 eine Darstellung einer Kupplung;
Fig. 12 mögliche Querschnittsausgestaltungen für das Gestellelement.

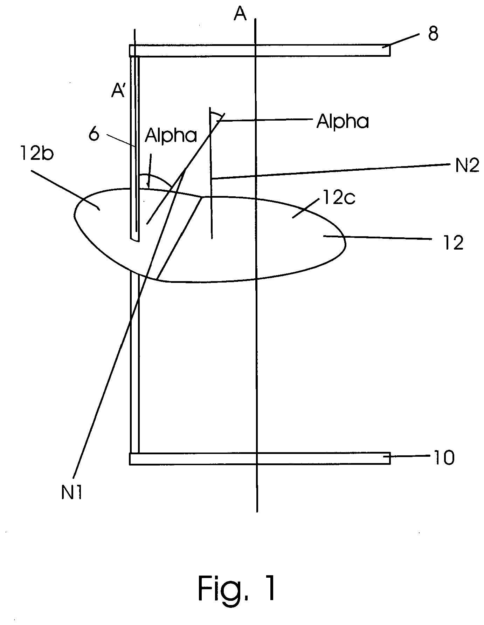

Fig. 1 zeigt eine Ausführungsform einer Grillvorrichtung 1 , wobei das Gestell 2 aus einem oberen horizontalen Halteelement 8 und einem unteren horizontalen Halteelement 10 besteht, die von einem vertikalen Gestellelement 6 voneinander beabstandet sind. Zwischen dem oberen und unteren Halteelement 8, 10 ist das Grillgutträgerelement 12 angeordnet. Es besteht aus einem ersten Teilbereich 12 b und einem zweiten Teilbereich 12 c, dessen normale Vektoren N1 , N2 in einem Winkel Alpha zueinander stehen. Zu sehen ist auch, dass der normale Vektor N1 des ersten Teilbereiches 12 b im gleichen Winkel Alpha zu dem normalen Vektor N2 des zweiten Teilbereiches 12 c steht wie zu der vertikalen Längsachse A, die parallel zu dem Gestellelement 6 angeordnet ist. Dabei weist der erste Teilbereich 12 b eine Öffnung auf, die in der gezeigten Position formschlüssig zu dem Gestellelement 6 ist. Zu sehen ist auch, dass der zweite Teilbereich 12 c in einer horizontalen von dem Gestellelement 6 weg weisenden Richtung eine Länge aufweist, die wenigstens dreimal so groß ist wie die Länge des ersten Teilbereiches 12 b in dieser Richtung. Auf diese Weise wird durch die Masse des zweiten Teilbereiches 12 c eine Kraft auf die Öffnung an dem Gestellelement 6 ausgeübt, die eine haftende Fixierung des Grillgutträgerelementes 12 an der vertikalen Position bezüglich des Gestellelementes 6 ermöglicht. Eine Form des Grillgutträgerelementes 12 ist hierbei im Wesentlichen einer Zunge nachempfunden.

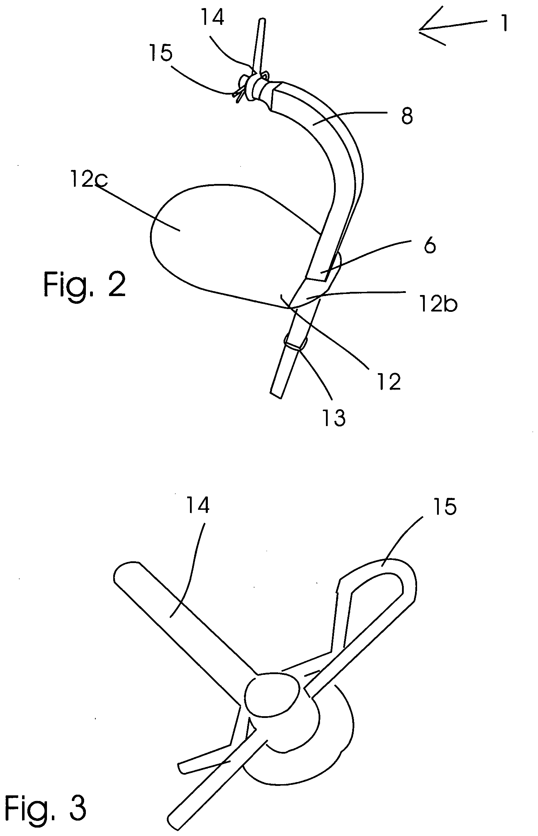

Fig. 2 zeigt eine perspektivische Ansicht der Grillvorrichtung 1. Bereits eingeführte Bezugszeichen werden dabei nicht notwendig wiederholt. Zusätzlich dargestellt, dass an dem Gestellelement 6 umfangsseitig unter dem Grillgutträgerelement 2 eine Wölbung 3 angeordnet ist, die größer als die Öffnung ist und eine Verschiebung des Grillgutträgerelementes 12 von unten begrenzt. In dieser Darstellung ist die Wölbung 13 als umfangsseitiger Gummiring ausgebildet. Weiterhin weist die Grillvorrichtung 1 hier die Eigenschaft auf, dass ein oberes Halteelement 8 wenigstens einen horizontalen Abschnitt und einen abgerundeten Abschnitt aufweist, der Verlängerung des vertikalen Gestellelementes 6 dieses mit dem horizontalen Abschnitt des oberen Halteelementes 8 verbindet. Weiterhin sind die Halteelemente 8, 10 sowie auch das Gestellelement 6 als Vierkantrohre mit quadratischem Querschnitt ausgebildet, wobei das obere Halteelement 8 an seinem Ende einen zylinderförmigen Abschnitt aufweist, dessen Durchmesser kleiner als eine Seitendicke des Vierkantrohres ist. Um diesen zylinderförmigen Abschnitt herum ist eine Augenschraube 14 angeordnet, die vorteilhaft zur rotierbaren Befestigung der Grillvorrichtung 1 dient. Die Augenschraube 14 wird von einer Federklemme 15 festgehalten.

Fig. 3 zeigt genauer den Aufbau von Augenschraube 14 und Federklemme 15 an dem zylinderförmigen Abschnitt. Während die Augenschraube 14 an der dem Gestellelement 6 zugewandten Seite des Halteelements 8 von einer Verdickung festgehalten wird, wird die auf der anderen Seite von der besagten Klemmfeder 15 gehalten. Sie besteht aus einem graden Stab, an deren Ende eine 180°-Rundung angeordnet ist, an deren Ende wiederum ein W-förmiger Abschnitt angeordnet ist, dessen Zacken den ersten stabförmigen Abschnitt federnd berühren. Wenn sich an dem zylinderförmigen Abschnitt eine Durchgangsbohrung in Radialrichtung befindet, so lässt sich der stabförmige Abschnitt der Klemmfeder in die Durchgangsbohrung einführen, sodass die mittlere Wölbung des "W" den radialen Abschnitt klemmend umgreift. Auf diese Weise wird die Augenschraube 14 hinter der Klemmfeder 15 festgehalten.

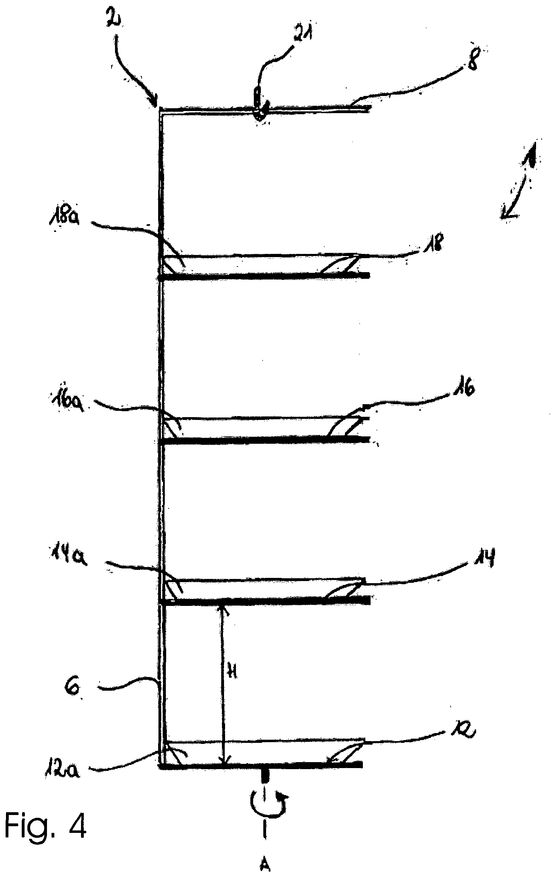

In Fig. 4 ist eine Ausführungsform einer Grillvorrichtung 1 gezeigt, wobei das Gestell 2 aus einem Gestellelement ausgebildet ist. Das Gestellelement ist an einem Halteelement 8 fixiert. Im einfachsten Fall ist zur Ausbildung des Gestells 2 ein erstes Grillgutträgerelement 12, welches an dem Gestellelement 6 angeordnet ist, an der Unterseite angeordnet. Das Gestell 2 ist somit als "U" ausgebildet. Innerhalb des Gestells 2 sind weitere Grillgutträgerelemente 14, 16, 18 angeordnet. Dies ist allerdings beispielhaft zu verstehen, so dass die Grillvorrichtung 1 auch mehr als die hier gezeigten vier Grillgutträgerelemente 12, 14, 16, 18 aufweisen kann. Die vier Grillgutträgerelemente 12, 14, 16, 18 sind hier in der Seitenansicht gezeigt. Es hat sich als vorteilhaft erweisen, die Grillgutträgerelemente 12, 14, 16, 18 rund auszubilden. Selbstverständlich ist die Ausbildung der Grillgutträgerelemente 12, 14, 16, 18 nicht auf rund beschränkt, sondern kann beispielsweise auch eckig, ellipsoidal oder auch polygonal ausgebildet sein.

Auf den Grillgutträgerelemente 12, 14, 16, 18 ist jeweils eine Grillgutträgerschale 12a, 14a, 16a, 18a angeordnet. Die Grillgutträgerschalen 12a, 14a, 16a, 18a weisen einen sich nach oben erweiternden Querschnitt auf und dienen der Grillgutaufnahme während des Grillvorgangs. Die jeweilige Grillgutträgerschale 12a, 14a, 16a, 18a ist auf dem Grillgutträgerelement 12, 14, 16, 18 aufgestellt. Zur zusätzlichen Fixierung der jeweiligen Grillgutträgerschale 12a, 14a, 16a, 18a auf dem korrespondierenden Grillgutträgerelement 12, 14, 16, 18 kann Letzteres eine zumindest teilweise umfangsseitige, sich nach vertikal nach oben erstreckende Erhebung aufweisen, welche als Rand ausgebildet ist. Diese Erhebung (nicht gezeigt) verhindert ein Heruntergleiten der jeweiligen Grillgutträgerschale 12a, 14a, 16a, 18a während des Grillvorgangs. Selbstverständlich sind auch weitere Halterungsmöglichkeiten der Grillgutträgerschalen 12a, 14a, 16a, 18a denkbar, die zur lösbaren Fixierung der Grillgutträgerschalen 12a, 14a, 16a, 18a geeignet sind. Vorteilhaft sind die Grillgutträgerschalen 12a, 14a, 16a, 18a während des Grillvorgangs einzeln entnehmbar. Je nach Größe des Grillgutes ist die Höhe H zwischen zwei Grillgutträgerelementen 12, 14, 16, 18 variabel ausbildbar, wobei die Höhe H bevorzugt einen Abstand im Bereich von 10 - 30 cm, bevorzugt von 18 - 28 cm, aufweist.

Bevorzugt weist das Halteelement 8 eine Ausnehmung 19 (nicht gezeigt) auf, welche bevorzugt als umfangsseitige Nut ausgebildet ist. Weiterhin bevorzugt ist diese Ausnehmung 19 mittig an dem Halteelement 8 angeordnet. Über diese Ausnehmung 19 ist die Grillvorrichtung 1 mit einem Haltemittel 21, welches bevorzugt als hakenartiges Element ausgebildet ist, lösbar an der Aufnahmeeinrichtung (nicht gezeigt) befestigt. Die Grillgutträgerelemente 12, 14, 16, 18 sind bei dieser Ausführungsform fest an dem Gestellelement 6 und die Grillgutträgerschalen 12a, 14a, 16a, 18a entnehmbar angeordnet. Während des Grillvorgangs wird die Grillvorrichtung 1 um ihre vertikale Längsachse A in einer vorbestimmbaren Geschwindigkeit rotiert. Dies ermöglicht ein gleichmäßiges Grillen des Grillguts von allen Seiten.

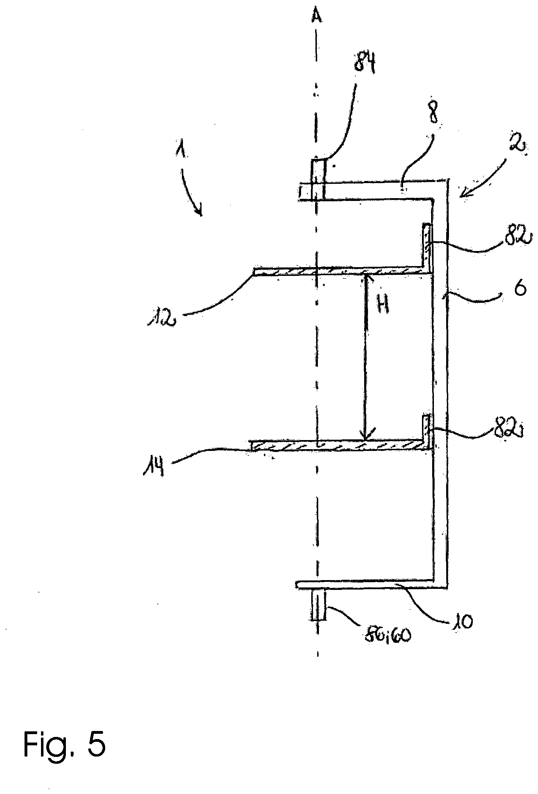

Fig. 5 zeigt einen weiteren schematischen Querschnitt einer Grillvorrichtung 1 mit einem U-förmig ausgebildeten Gestell 2. Das Gestell 2 umfasst ein Gestellelement 4, welches zwei Halteelemente 8, 10 voneinander beabstandet. Ferner umfasst die dargestellte weitere Ausführungsform einer Grillvorrichtung 1 zwei Grillgutträgerelemente 2, 14, welche hier allerdings lediglich zur Veranschaulichung zu verstehen sind. Selbstverständlich kann die hier gezeigte Grillvorrichtung 1 mehr als die zwei gezeigten Grillgutträgerelemente 12, 14 umfassen. Die Grillgutträgerelemente 12, 14 weisen jeweils einen Fixierungsabschnitt 82 auf, mittels welchem die Grillgutträgerelemente 12, 14 lösbar an dem Gestellelement 4 angeordnet sind. Durch die lösbare Anordnung kann die Höhe H zwischen den Grillgutträgerelementen 12, 14 beliebig variiert und in Abhängigkeit des zu grillenden Grillgutes stets verändert werden. Die Höhe H ist bevorzugt im Bereich von 10 - 30 cm, bevorzugt im Bereich von 18 - 28 cm, ausgebildet.

Das Halteelement 8 am oberen vertikalen Ende der Grillvorrichtung 1 weist ein Kupplungselement 84 auf, mittels welchem die Grillvorrichtung 1 an wenigstens eine Antriebseinrichtung (nicht gezeigt) lösbar anschließbar ist. Am unteren vertikalen freien Ende der Grillvorrichtung 1 weist das weitere Halteelement 10 wenigstens einen Vorsprung 86 auf, welcher meist bevorzugt als Führungspin und/oder als Widerlager 60 ausgebildet ist.

Selbstverständlich ist die Ausführung nicht hierauf beschränkt. Ist beispielsweise die Antriebseinrichtung in der Nähe des unteren vertikalen freien Endes der Grillvorrichtung vorgesehen, so ist die Anordnung von Kupplungselement 84 und Vorsprung 86 bzw. Widerlager 60 vertauscht.

Zudem sind die Grillgutträgerelemente 12, 14 in diesem Ausführungsbeispiel in ihrer Längsrichtung größer ausgebildet, so dass sie über die beiden Halteelemente 8, 10 hervorstehen. Dies ist von Vorteil, da somit die aufzunehmenden Grillgutträgerschalen (nicht gezeigt) standfest auf den Grillgutträgerelementen 12, 14 anordbar sind.

Die Rotation der hier in Fig. 5 gezeigten Grillvorrichtung 1 erfolgt um die Rotationsachse A, welche sich in Längsrichtung der Grillvorrichtung 1 zentral durch Kupplungselement sowie Vorsprung bzw. Widerlager erstreckt.

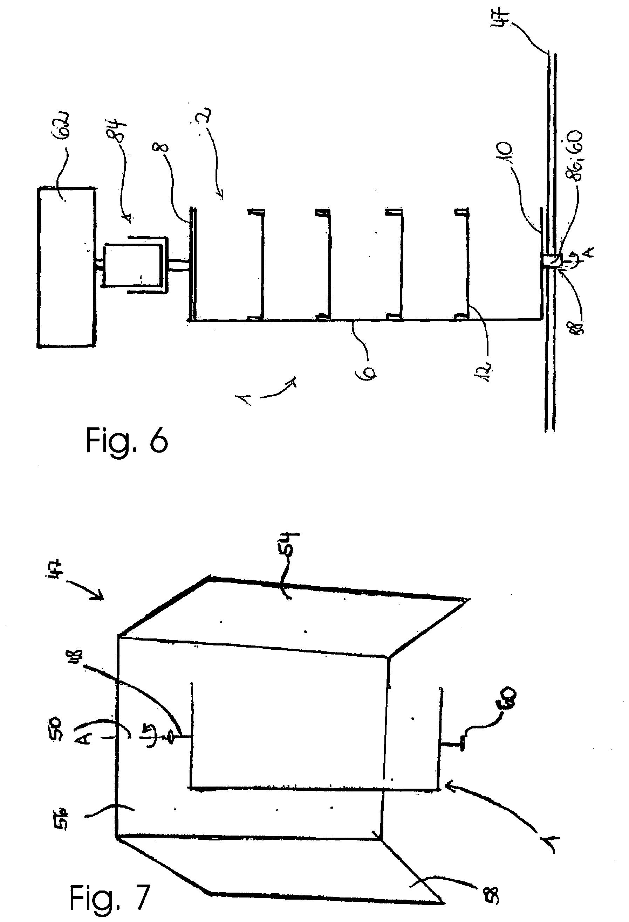

In Fig. 6 ist eine weitere mögliche Antriebsart der Grillvorrichtung 1 gezeigt. Das Gestell 2 umfasst hier ein Gestellelement 6, welches über ein oberes und unteres Halteelement 8, 10 ein U-förmiges Gestell aufspannt. Zudem ist eine Antriebseinrichtung 62 gezeigt, welche über ein Kupplungselement 84 mit der Grillvorrichtung 1 in lösbarer Verbindung steht. Bevorzugt ist das Kupplungselement 84 in diesem Beispiel als Schnellkupplung, meist bevorzugt als Rutschkupplung, ausgebildet. Am unteren freien vertikalen Ende der Grillvorrichtung 1 ist wenigstens ein Vorsprung 86 und/oder ein Widerlager 60 angeordnet, welches in eine komplementär dazu ausgebildete Öffnung 88 des Grillgerätes einführbar ist. Während des Grillvorgangs erfolgt eine Rotation der Grillvorrichtung 1 um die Rotationsachse A.

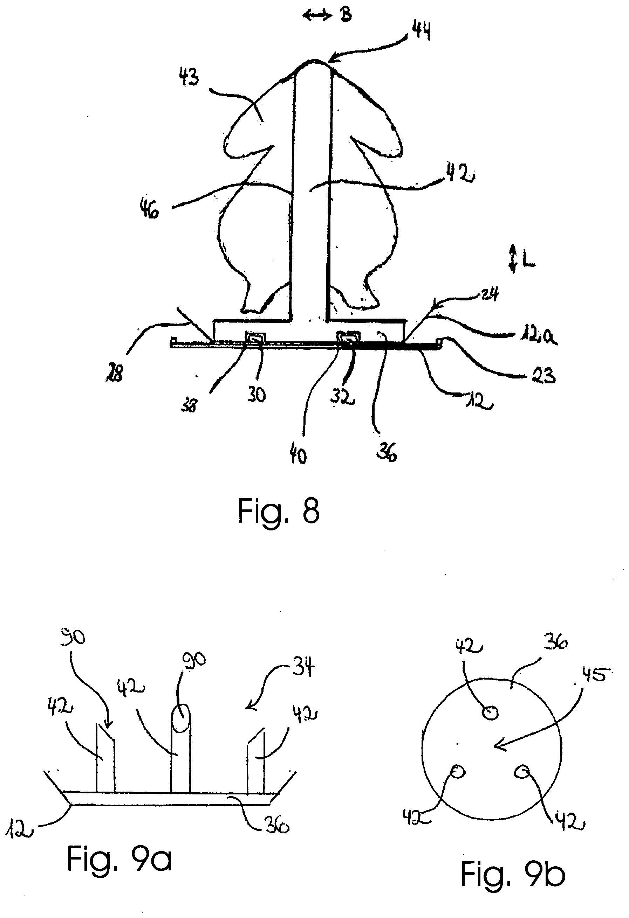

In Fig. 8 ist ein schematischer Querschnitt eines Teils einer Grillvorrichtung 1 gezeigt. Das Grillträgerelement 12 weist umfangsseitig zumindest teilweise eine Erhebung 23 auf, welche als Begrenzungsmittel dient und die auf dem Grillgutträgerelement 12 angeordnete Grillgutträgerschale 12a vor dem Verrutschen bzw. Herabgleiten während des Grillvorgangs schützt. Die Grundfläche der Grillgutträgerschale 12a weist einen geringeren Durchmesser als die nach oben gerichtete Öffnung auf, so dass sich ein konisch nach oben erweiternder Mantelbereich 28 bedingt, welcher mit einem umfangsseitig angeordneten Randbereich 24 abschließt. Die Grillgutträgerschale 12a weist bevorzugt zwei Positionierungsmittel 30 und 32 auf, welche als sich vertikal nach oben erstreckende Vorsprünge ausgebildet sind. In dieser Ausführungsform sind die Vorsprünge mit einem eckigen Querschnitt gezeigt. Diese sind natürlich nicht hierauf begrenzt, sondern können auch in jeglicher anderer Geometrie, beispielsweise als nach oben spitz zulaufendes Dreieck oder auch in Form einer Kugel bzw. Halbkugel vorgesehen sein. Bevorzugt umfasst das innerhalb der Grillgutträgerschale 12a anordenbare Stützelement 34 eine Bodenplatte 36, welche zu den Positionierungsmitteln 30 und 32 komplementär ausgebildete Ausnehmungen 38 und 40 aufweist, sodass nach dem Einlegen der Bodenplatte 36 diese im Wesentlichen verschiebungsfrei in der Grillgutträgerschale 12a angeordnet ist.

Zudem umfasst das Stützelement 34 eine schaftartige Verlängerung 42, welche sich vertikal nach oben erstreckt, und deren freies Ende 44 in diesem Beispiel als abgerundete Halbkugel ausgebildet ist. An dieser schaftartigen Verlängerung 42 ist schematisch das Grillgut 43 angeordnet. Es ist denkbar, dass innerhalb dieses schaftartigen Elements 42, welches hier einen zylindrisch angeordneten Mantel 46 aufweist, wenigstens ein Heizelement angeordnet ist (nicht gezeigt). Dieses Heizelement kann beispielsweise in Spiralform angeordnet sein.

Bevorzugt weist die schaftartige Verlängerung 42 eine vertikale Länge L im Bereich von 7 - 25 cm, bevorzugt von 10 - 18 cm, auf und eine Breite B im Bereich von 2 - 8 cm, bevorzugt im Bereich von 3 - 6 cm.

Wird das Grillgutträgerelement 12 selbst schalenförmig ausgebildet und wird auf eine separate Grillgutträgerschale 12a verzichtet, so ist die oben ausgeführte Fixierung des Stützelements 34 analog auf das Grillgutträgerelement 12 anwendbar.

Fig. 9a zeigt eine schematische Seitenansicht einer weiteren vorteilhaften Ausbildung des Grillgutträgerelements 12 mit einem Stützelement 34, welches eine Bodenplatte 36 umfasst. Die Fixierung des Stützelements 34 ist hier zur Vereinfachung nicht erneut dargestellt. Es wird auf die oben beschriebene Ausführung, insbesondere in Fig. 7, verwiesen. Das Stützelement 34 umfasst weiterhin drei sich nach oben erstreckende schaftartige Verlängerungen 42, deren Anordnung in der Draufsicht in Fig. 8b verdeutlicht ist. Bevorzugt erfolgt die dreieckige Anordnung der schaftartigen Verlängerungen 42 auf der Bodenplatte 36 derart, dass in dem aufgespannten Zwischenbereich 45 das Grillgut (nicht gezeigt) anord- und fixierbar ist. Die schaftartigen Verlängerungen 42 sind bevorzugt zylindrisch ausgebildet und weisen an ihrem nach oben gerichteten freien Ende jeweils einen abgeschrägten Flächenbereich 90 auf. Bevorzugt sind diese Flächenbereiche 90 einander zugewandt. Vorteilhaft erfolgt die Abschrägung in einem Winkel zwischen 20 - 80°, meist bevorzugt zwischen 30 - 50°. Diese Abschrägung ist insbesondere von Vorteil, da hierdurch das in dem Zwischenbereich 45 anordbare Grillgut leicht positionierbar und während des Grillvorgangs fixierbar ausgebildet ist.

Das hier beschriebene Grillgutträgerelement 12 erweist sich besonders vorteilhaft zum Grillen von Haxen oder Backschinken. Durch die sich nach oben erstreckenden, schaftartigen Verlängerungen 42 wird das Grillgut derart gehalten, sodass insbesondere im Bodenbereich der Grillgutträgerschale eine verbesserte Hitzezirkulation stattfindet, sodass das Grillgut auch von unten gegart und gegrillt wird. Selbstverständlich ist die Ausführung nicht auf lediglich drei schaftartige Verlängerungen begrenzt, sondern, in Abhängigkeit der Größe des Grillguts, beliebig erweiterbar.

Darüber hinaus ist denkbar, bevorzugt wenigstens zwei schaftartige Verlängerungen 42 vorzusehen und diese bevorzugt mit einem Trägerelement, welches im einfachsten Fall als Trägerring (nicht gezeigt) ausgebildet ist, verbunden vorzusehen. Das Grillgut wird auf dem Trägerring positioniert und durch die sich nach oben erstreckenden schaftartigen Verlängerungen 42 von der Grillgutträgerschale beabstandet, sodass auch weiterhin eine Hitzezirkulation begünstigt ist. Das Trägerelement ist bevorzugt aus Metall und/oder Kunststoff und/oder Kompositmaterial und/oder einer Mischung hieraus ausgebildet. Besonders vorteilhaft erweist sich neben Metall auch hitzebeständiger Kunststoff.

In Fig. 7 ist ein schematischer Aufbau eines Grillgeräts 47 gezeigt, in welchem lediglich eine Grillvorrichtung 1 vorgesehen ist. Die Grillvorrichtung 1 selbst umfasst, wie in der Fig. 1 gezeigt, ein Gestell 2 sowie ein Gestellelement 6. Die in dem Gestell 2 angeordneten Grillgutträgerelemente sind hier der Einfachheit halber nicht gezeigt. Die Grillgutvorrichtung 1 weist bevorzugt an ihrem Halteelement 8, bevorzugt an beiden Halteelementen 8, 10, ein Haltemittel 21 auf, mittels welchem die Grillvorrichtung 1 an der Aufnahmeeinrichtung 50 lösbar anordbar ist. Die Antriebseinrichtung (hier nicht gezeigt) bedingt eine Rotation der Grillvorrichtung 1 um deren vertikale Längsachse A.

In diesem Ausführungsbeispiel umfasst das Gehäuse des Grillgeräts 47 ein U-förmig ausgebildetes Heizelement 52, welches aus insgesamt drei flächenartigen Heizabschnitten 54, 56, 58 besteht. Bevorzugt ist denkbar, dass die Grillvorrichtung 1 zudem ein Widerlager 60 aufweist, sodass eine gleichmäßige Rotation ermöglicht wird. Selbstverständlich ist dies nur als Beispiel zu sehen. Es sind darüber hinaus auch Grillgeräte denkbar, welche eine Vielzahl an Grillvorrichtungen 1 aufnehmen können, um entsprechend große Mengen an Grillgut gleichzeitig fertig zu stellen.

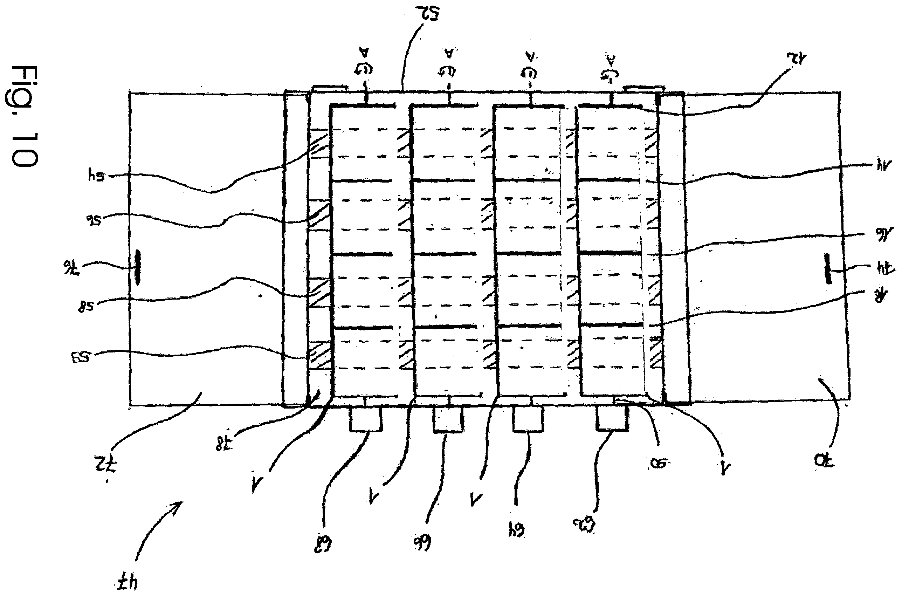

In Fig. 10 ist ein weiteres Grillgerät 47 gezeigt, welches ein Grillgehäuse 52 sowie insgesamt vier darin angeordnete der Grillvorrichtungen 1 umfasst. Die vier Grillvorrichtungen 1 sind hier in Reihe nebeneinander angeordnet. Zur besseren Verständlichkeit werden Grillgutträgerschalen und Grillgut hier nicht dargestellt. Es ist jedoch selbstverständlich, dass für das hier beschriebene Grillgerät 47 die oben beschriebenen Grillgutträgerschalen bzw. schalenartig ausgebildete Grillgutträgerelemente vorzusehen sind. Das Grillgehäuse 52 umfasst bevorzugt mehrere, horizontal angeordnete Heizelemente 54, 56, 58, 59. Die Grillvorrichtungen 1 sind mittels Haltemittel 21 (nicht gezeigt), welches bevorzugt als hakenartiges Element ausgebildet ist, aufgehangen. Das Haltemittel 21 (nicht gezeigt) dient als Bindeglied zwischen Grillvorrichtung 1 und Aufnahmeeinrichtung 50.

Die Aufnahmeeinrichtung 50 ist jeweils mit einer Antriebseinrichtung 62, 64, 66, 68 verbunden. Als Antriebseinrichtung wird bevorzugt ein Motorantrieb verstanden, mittels welchem die jeweilige Grillvorrichtung 1 um ihre jeweilige Längsachse A rotierbar ist. Es ist denkbar, dass jede Grillvorrichtung 1 eine separate Antriebseinrichtung 62, 64, 66, 68 aufweist, so dass die hier gezeigten vier Grillvorrichtungen 1 in unterschiedlicher, voneinander unabhängiger Geschwindigkeit rotierbar sind. Ferner ist ebenfalls bevorzugt, dass lediglich eine Antriebseinrichtung 62 für alle Grillvorrichtungen 1 vorgesehen ist, so dass alle Grillvorrichtungen 1 mit der gleichen Rotationsgeschwindigkeit beaufschlagt werden. Vorteilhaft erfolgt der Antrieb der einzelnen Grillvorrichtungen 1 über einen Zahnriemen (nicht gezeigt), welcher von der einen Antriebseinrichtung 62 angetrieben wird.

Weiterhin vorteilhaft umfasst das Grillgehäuse 52 wenigstens eine, bevorzugt zwei, beweglich angeordnete Seitenflächen 70, 72, welche meist bevorzugt schwenkbar am Grillgehäuse 52 angeordnet sind. Die Seitenflächen 70, 72 weisen bevorzugt zwei Griffelemente 74, 76 auf, mittels welchen die beiden Seitenflächen 70, 72 verschwenkbar sind. Bei dem in Fig. 6 dargestellten Grillgehäuse 52 sind die beiden Seitenflächen 70, 72 im geöffneten Zustand nach außen geschwenkt gezeigt. In diesem Zustand erfolgt die Bestückung der Grillvorrichtungen 1. Sind alle Grillvorrichtungen 1 mit Grillgut (nicht gezeigt) bestückt, so werden die beiden Seitenflächen 70, 72 nach innen geschwenkt und der Grillraum 78 wird geschlossen. Unter Grillraum 78 ist der Raum zu verstehen, in welchem die Grillvorrichtungen 1 angeordnet sind. Die schwenkbare Anordnung der beiden Seitenflächen 70, 72 erweist sich als vorteilhaft, da das Grillgut in einem nahezu geschlossenen Grillraum 78 gegrillt wird und sich somit die Grillzeit deutlich verkürzt im Gegensatz zu offenen Grillgeräten aus dem Stand der Technik. Bevorzugt sind die Seitenflächen 70, 72 aus hitzebeständigem, durchsichtigem Material ausgebildet, so dass das Grillgut jederzeit sichtbar und überprüfbar ist, ohne dass das Grillgehäuse 52 geöffnet werden muss. Die Seitenflächen 70, 72 sind bevorzugt türenartig ausgebildet.

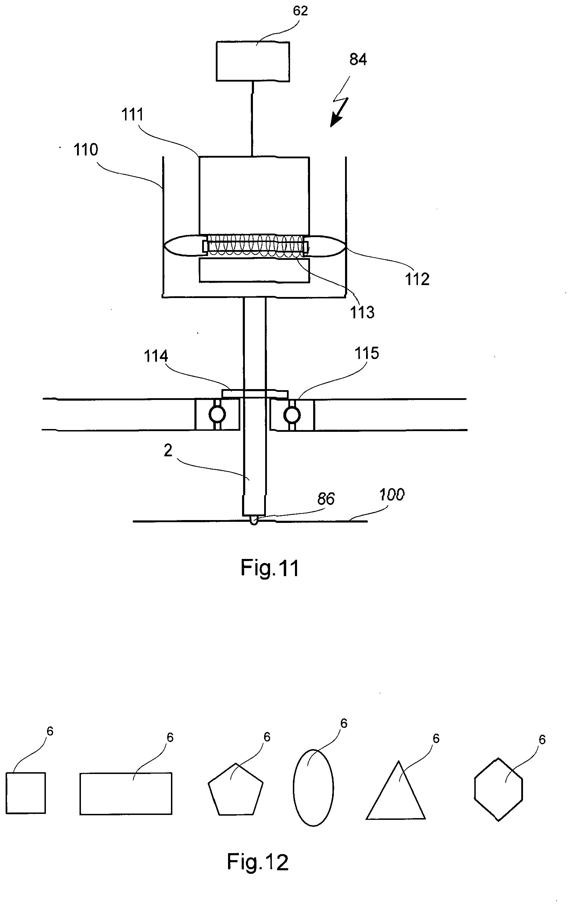

Figur 11 zeigt eine mögliche Ausgestaltung eines Kupplungselements 84 Das Kupplungselement 84 besteht hierbei aus einem Zylinder 110 und einem Kolben 111, wobei das Kupplungselement 84 zwischen Zylinder 110 und Kolben 111 kraftschlüssig ist. Der Kolben 111 ist mit einem Motor 62 verbunden und der Zylinder 110 ist vorzugsweise über ein thermisch isolierendes Element dem Gestell 2 verbunden. In dieser Darstellung ist das Gestell 2 nur schematisch ohne dessen Einzelteile dargestellt. Denkbar ist auch eine Vertauschung der Positionen von Kolben 111 und Zylinder 110. Weiterhin ist in der Figur 11 ein Wälzlager 115 vorgesehen, vorzugsweise in einem oberen Abschnitt des Gestells 2. In der gezeigten Ausführungsform ist eine Führungsstange mit einem Andrückelement 113, insbesondere einer Feder, in dem Kolben vorgesehen, welche eine Andrückkraft nach radial außen ausübt. An dieser Feder sind die Schleifflächen 112 vorgesehen, wobei die beiden Schleifflächen 112 bevorzugt aus einem abriebfesten und/oder elastischen Material, wie zum Beispiel einem Hartgummi vorgesehen sind. Weiterhin ist ein Auflageelement 114 vorgesehen, welches auf dem inneren Ring des Wälzlagers 115 aufliegt, so dass das Gestell 2 hängend auf dem Wälzlager 115 gelagert ist. Das Auflageelement 114 kann als thermisch entkoppelndes Element ausgebildet sein, beispielsweise als Keramikscheibe. Weiterhin ist es möglich, dass an der Unterseite des Gestells 2 ein Vorsprung 86 vorgesehen ist, welcher in einem Teil des Gehäuses 00 geführt ist. Durch diese Führung kann ein Schwingen des Gestells 2 verhindert werden.

Figur 12 zeigt mögliche Ausgestaltungsvarianten eines nicht-rotationssymmetrischen QuerSchnitts des Gestellelements 6.

Die Kombination der offenbarten Merkmale ist rein beispielhaft. Erfindungsgemäß können die Merkmale auch einzeln und in anderen Kombinationen verwendet werden.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

1 Grillvorrichtung
2 Gestell
4 Gestellelement
6 zweites Halterahmenelement
8 Halteelement
10 Halteelement
12, 14, 16, 18 Grillgutträgerelement
12a, 14a, 16a, 18a Grillgutträgerschale
19 Ausnehmung
21 Haltemittel
23 Erhebung
24 Randbereich
28 Mantelbereich
30, 32 Positionierungsmittel
34 Stützelement
36 Bodenplatte
38, 40 Ausnehmung
42 schaftartige Verlängerung
44 freies Ende
45 Zwischenraum
46 Mantel
50 Aufnahmeeinrichtung
52 Heizelement
54, 56, 58, 59 flächenartiger Heizabschnitt
60 Widerlager
62, 64, 66, 68 Antriebseinrichtung
70, 72 Seitenfläche
74, 76 Griffelement
78 Grillraum
81 Befestigungsmittel
82 Fixierungsabschnitt
84 Kupplungselement 86 Vorsprung
88 weitere Öffnung
90 Flächenbereich
100 Kupplung
110 Zylinder
111 Kolben
112 Schleifflächen
113 Andrückelement
114 Auflageelement
115 Wälzlager
B Breite
H Höhe
L Länge
A Längsachse
N1 Normalenvektor erster Teilbereich
N2 Normalenvektor zweiter Teilbereich

## Patentansprüche

1. Grillvorrichtung (1) zum Grillen von Grillgut (43),
a. umfassend wenigstens ein Gestell (2), mit wenigstens einem Gestellelement (6) sowie mit wenigstens einem Halteelement (8), welches an einem Ende des Gestellelementes (6) angeordnet ist
b. sowie wobei die Grillvorrichtung (1) um eine vertikale Längsachse (A) rotierbar ausgebildet ist,
c. sowie mit wenigstens einem Grillgutträgerelement (12),
d. wobei die Grillvorrichtung hängend und/oder stehend entlang der vertikalen Drehachse gelagert ist und
e. das Grillgutträgerelement (12) einen ersten Teilbereich (12b) aufweist, welcher mit einer Öffnung ausgestattet ist, durch welche das Gestellelement (6) führbar ist,
f. wobei das Gestellelement (6) einen nicht-rotationssymmetrischen Querschnitt aufweist, derart, dass das Grillgutträgerelement (12) und das Gestellelement (6) bezüglich einer Normalenebene (N) der vertikalen Längsachse (A) formschlüssig zusammenwirken.
**dadurch gekennzeichnet, dass**
das Grillgutträgerelement (12) bezüglich der Öffnung eine asymmetrische Gewichtsverteilung aufweist, so dass das Grillgutträgerelement (12) und das Gestellelement (6) bezüglich der vertikalen Längsachse (A) kraftschlüssig zusammenwirken.

2. Grillvorrichtung (1) nach Anspruch 1,
**dadurch gekennzeichnet, dass**
die Öffnung in einer horizontalen Richtung eine Länge aufweist, welche größer ausgestaltet ist, als die Dicke des Gestellelements (6).

3. Grillvorrichtung (1) nach einem der Ansprüche 1 bis 2,
**dadurch gekennzeichnet, dass**
der erste Teilbereich (12b) in einer Position der formschlüssigen Verbindung eine Neigung bezüglich der Normalenebene (N) aufweist.

4. Grillvorrichtung (1) nach wenigstens einem der vorhergehenden Ansprüche,
**dadurch gekennzeichnet, dass**
das Grillgutträgerelement (12) einen zweiten Teilbereich aufweist, welcher zur Aufnahme des Grillguts (43) selbst oder wenigstens zur Aufnahme eines Grillguttellers ausgestaltet ist.

5. Grillvorrichtung (1) nach Anspruch 4,
**dadurch gekennzeichnet, dass**
der zweite Teilbereich in einer horizontalen von dem Gestellelement (6) weg weisenden Richtung eine Länge aufweist, die wenigstens dreimal so groß ist wie die Länge des ersten Teilbereichs in dieser Richtung.

6. Grillvorrichtung (1) nach einem der Ansprüche 4 bis 5,
**dadurch gekennzeichnet, dass**
sich der zweite Teilbereich in einer Position einer formschlüssigen Verbindung zwischen dem Grillgutträgerelement (12) und dem Gestellelement (6) im Wesentlichen in einer horizontalen Richtung erstreckt.

7. Grillvorrichtung (1) nach einem der vorhergehenden Ansprüche,
**dadurch gekennzeichnet, dass**
das Gestellelement (6) ein weiteres Halteelement (10) an der Unterseite des Gestellelements (6) und/oder eine Führung in der Normalenebene (N) aufweist.

8. Grillvorrichtung (1) nach einem der vorhergehenden Ansprüche,
**dadurch gekennzeichnet, dass**
das Gestellelement (6) gezogen ist und einen gekrümmten Bereich aufweist, wobei sich das Profil in dem gekrümmten Bereich verjüngt.

9. Grillvorrichtung (1) nach einem der vorhergehenden Ansprüche,
**dadurch gekennzeichnet, dass**
oberhalb des oberen Halteelements (8) in Richtung der vertikalen Längsachse (A) ein Wälzlager (115) angeordnet ist.

10. Grillvorrichtung (1) nach Anspruch 9,
**dadurch gekennzeichnet, dass**
sich ein Teil des oberen Halteelements (8) in Richtung der vertikalen Längsachse (A) nach oben erstreckt und durch das Wälzlager (115) geführt ist.

11. Grillvorrichtung (1) nach Anspruch 10,
**dadurch gekennzeichnet, dass**
der Teil des oberen Haltelements (8), welcher durch das Wälzlager (115) geführt ist, zumindest eine Auflagefläche (114) zur Auflage des Halteelements (8) auf dem Wälzlager (115) aufweist.

12. Grillvorrichtung (1) nach einem der Ansprüche 1 bis 11 mit einer Kupplung (100) mit einem Kolben (111) und einem Zylinder (110) zur Übertragung einer rotatorischen Bewegung auf ein Gestell (2) einer Grillvorrichtung (1), wobei die Kupplung (100) zwischen Kolben (111) und Zylinder (110) eine kraftschlüssige Kupplung (100) ist und eine Anzahl an Schleifflächen (12) aufweist, welche zur Herstellung eines definierten Kraftschlusses zwischen Kolben (111) und Zylinder (110) geeignet sind, **dadurch gekennzeichnet, dass**
die Anzahl an Schleifflächen (112) in dem Kolben (111) oder dem Zylinder (110) radialbeweglich angeordnet sind, wobei die Schleifflächen (112) einen Kraftschluss durch eine Andrückkraft (K) in radialer Richtung erzeugen.

13. Grillvorrichtung (1) nach Anspruch 12,
**dadurch gekennzeichnet, dass**
der Kolben (111) und der Zylinder (110) einen in Axialrichtung rotationssymmetrischen Querschnitt aufweisen.

14. Grillvorrichtung (1) nach Anspruch 12 oder 13,
**dadurch gekennzeichnet, dass**
die Anzahl an Schleifflächen (112) mit einem Andrückelement (113) verbunden ist, welches die Schleifflächen (112) mit einer vordefinierten Kraft beaufschlagt und wobei bevorzugt bei Überschreiten eines definierten Schwellwerts der Andrückkraft (K) der Kolben (11) und der Zylinder (110) gegeneinander beweglich sind.

## Claims

1. A grill device (1) for grilling food to be grilled (43),
a. comprising at least one frame (2), with at least one frame element (6) as well as with at least one holding element (8) which is arranged at one end of the frame element (6),
b. and wherein the grilling device is rotatable about a vertical longitudinal axis (A),
c. and with at least one support element (12) for food to be grilled (43),
d. wherein the grill device (1) is suspended and/or mounted upright along the vertical rotational axis and
e. the support element (12) for food to be grilled (43) has a first portion (12b) which has an opening through which the frame element (6) can be inserted,
f. wherein the frame element (6) has a non-rotationally symmetrical cross-section such that the support element (12) for the food to be grilled (43) and the frame element (6) co-operate by interlocking with respect to a normal plane of the vertical longitudinal axis (A),
**characterized in that**
the support element (12) for food to be grilled (43) has an asymmetric weight distribution with respect to the opening, so that the support element (12) for food to be grilled (43) and the frame element (6) co-operate with respect to the vertical longitudinal axis (A) by force fitting.

2. The grill device (1) according to claim 1,
**characterized in that**
the opening has, in a horizontal direction, a length which is greater than the thickness of the frame element (6).

3. The grill device (1) according to claim 1 or 2,
**characterized in that**
the first portion (12b), in an interlocking connection position, has an inclination relative to the normal plane (N).

4. The grill device (1) according to one of the preceding claims,
**characterized in that**
the support element (12) for food to be grilled (43) has a second portion which is configured to receive the food to be grilled (43) or at least to receive a plate for food to be grilled (43).

5. The grill device (1) according to claim 4,
**characterized in that**
in a horizontal direction away from the frame element (6), the second portion has a length which is at least three times as great as the length of the first portion (12b) in this direction.

6. The grill device (1) according to claim 4 or 5,
**characterized in that**
in a form fitting connection position between the support element (12) for food to be grilled (43) and the frame element (6), the second portion extends substantially in a horizontal direction.

7. The grill device (1) according to one of the preceding claims,
**characterized in that**
the frame element (6) has a further holding element (8) on the underside of the frame element (6) and/or a guide in the normal plane (N).

8. The grill device (1) according to one of the preceding claims,
**characterized in that**
the frame element (6) is drawn and has a curved region, wherein the profile tapers in the curved region.

9. The grill device (1) according to one of the preceding claims,
**characterized in that**
a rolling element bearing (115) is arranged above the upper holding element (8) in the direction of the vertical longitudinal axis (A).

10. The grill device (1) according to claim 9,
**characterized in that**
a part of the upper holding element (8) extends upwards in the direction of the vertical longitudinal axis (A) and is guided by the rolling element bearing (115).

11. The grill device (1) according to claim 10,
**characterized in that**
the part of the upper holding element (8) which is guided by the rolling element bearing (115) has at least one bearing surface (114) for the holding element (8) to bear on the rolling element bearing (115).

12. The grill device (1) according to one of the claims 1 to 11 with a coupling (100) with a piston (111) and a cylinder (110) for transmission of a rotational movement to a frame (2) of a grill device (1), wherein the coupling (100) between the piston (111) and the cylinder (110) is a force-fitting coupling (100) and has a number of contact surfaces (112) which are suitable for production of a defined force fit between the piston (111) and the cylinder (110),
**characterised in that**
the number of contact surfaces (112) are arranged so as to be radially movable in the piston (111) or the cylinder (110), wherein the contact surfaces (112) produce a force fit by a pressing force (K) in a radial direction.

13. The grill device (1) according to claim 12,
**characterised in that**
the piston (111) and the cylinder (110) have a rotationally symmetrical cross-section in the axial direction.

14. The grill device (1) according to claim 12 or 13,
**characterised in that**
the number of contact surfaces (112) are connected to a pressing element (113) which applies a pre-defined force to the contact surfaces (112), and wherein when a defined threshold value of the pressing force is exceeded the piston (111) and the cylinder (110) are movable relative to one another.

## Revendications

1. Dispositif de grillage (1) pour griller des aliments grillés (43),
a. comprenant au moins un cadre (2), avec au moins un élément de cadre (6) et avec au moins un élément de maintien (8) qui est disposé à une extrémité de l'élément de cadre (6)
b. et le dispositif de grillage (1) étant conçu pour pouvoir tourner autour d'un axe longitudinal vertical (A),
c. ainsi qu'avec au moins un élément de support d'aliments grillés (12),
d. le dispositif de grillage étant monté suspendu et / ou debout le long de l'axe vertical de rotation et
e. l'élément de support d'aliments grillés (12) ayant une première zone partielle (12b) qui est équipée d'une ouverture à travers laquelle l'élément de cadre (6) peut être guidé,
f. l'élément de cadre (6) ayant une section transversale non symétrique en rotation, de sorte que l'élément de support d'aliments grillés (12) et l'élément de cadre (6) interagissent positivement par rapport à un plan normal (N) de l'axe longitudinal vertical (A),
**caractérisé en ce que**
l'élément de support des aliments grillés (12) présente une répartition asymétrique du poids par rapport à l'ouverture, de sorte que l'élément de support des aliments grillés (12) et l'élément de cadre (6) interagissent de manière solidaire par rapport à l'axe longitudinal vertical (A).

2. Dispositif de grillage (1) selon la revendication 1,
**caractérisé en ce que**
l'ouverture a une longueur dans une direction horizontale qui est conçue pour être supérieure à l'épaisseur de l'élément de cadre (6).

3. Dispositif de grillage (1) selon l'une des revendications 1 à 2,
**caractérisé en ce que**
la première zone partielle (12b) a une inclinaison par rapport au plan normal (N) dans une position de la connexion positive.

4. Dispositif de grillage (1) selon au moins l'une des revendications
précédentes,
**caractérisé en ce que**
l'élément de support pour aliments grillés (12) a une seconde zone partielle qui est conçue pour contenir les aliments grillés (43) ou au moins pour contenir une assiette à aliments grillés.

5. Dispositif de grillage (1) selon la revendication 4,
**caractérisé en ce que**
la deuxième zone partielle a une longueur dans une direction horizontale s'éloignant de l'élément de cadre (6) qui est au moins trois fois la longueur de la première zone partielle dans cette direction.

6. Dispositif de grillage (1) selon l'une des revendications 4 à 5,
**caractérisé en ce que**
la deuxième zone partielle s'étend essentiellement dans une direction horizontale dans une position de connexion positive entre l'élément de support de grillage (12) et l'élément de cadre (6).

7. Dispositif de grillage (1) selon l'une des revendications précédentes,
**caractérisé en ce que**
l'élément de cadre (6) comporte un autre élément de maintien (10) sur la face inférieure de l'élément de cadre (6) et / ou un guide dans le plan normal (N).

8. Dispositif de grillage (1) selon l'une des revendications précédentes,
**caractérisé en ce que**
l'élément de cadre (6) est produit par soyage et présente une zone courbée, le profil se rétrécissant dans la zone courbée.

9. Dispositif de grillage (1) selon l'une des revendications précédentes,
**caractérisé en ce qu'**
un roulement mécanique (115) est disposé au-dessus de l'élément de maintien supérieur (8) dans la direction de l'axe longitudinal vertical (A).

10. Dispositif de grillage (1) selon la revendication 9,
**caractérisé en ce qu'**
une partie de l'élément de maintien supérieur (8) s'étend vers le haut dans la direction de l'axe longitudinal vertical (A) et est guidée par le roulement mécanique (115).

11. Dispositif de grillage (1) selon la revendication 10,
**caractérisé en ce que**
la partie de l'élément de maintien supérieur (8) qui est guidée par le roulement mécanique (115) a au moins une surface d'appui pour le support de l'élément de maintien (8) sur le roulement mécanique (115).

12. Dispositif de grillage (1) selon l'une des revendications 1 à 11 avec un accouplement (100) avec un piston (111) et un cylindre (110) pour transmettre un mouvement de rotation à un cadre (2) d'un dispositif de grillage (1), l'accouplement (100) entre le piston (111) et le cylindre (110) étant un accouplement (100) à connexion solidaire et ayant un certain nombre de surfaces de meulage (112) qui sont appropriées pour produire une connexion solidaire définie entre le piston (111) et le cylindre (110), **caractérisé en ce que**
le nombre de surfaces de meulage (112) sont agencés pour être mobiles radialement dans le piston (111) ou dans le cylindre (110), les surfaces de meulage (112) générant une connexion solidaire par une force d'appui (K) dans une direction radiale.

13. Accouplement (100) selon la revendication 12,
**caractérisé en ce que**
le piston (111) et le cylindre (110) ont une section transversale symétrique en rotation dans le sens axial.

14. Accouplement (100) selon la revendication 12 ou 13,
**caractérisé en ce que**
le nombre de surfaces de meulage (112) est relié à un élément d'appui (113), qui agit sur les surfaces de meulage (112) avec une force prédéfinie, et de préférence le piston (11) et le cylindre (110) étant mobiles l'un contre l'autre lorsqu'une valeur seuil définie de la force d'appui (K) est dépassée.
